(19) Europäisches Patentamt
European Patent Office
Office européen des brevets

(11) **EP 4 181 227 A1**

(12) **EUROPEAN PATENT APPLICATION**
published in accordance with Art. 153(4) EPC

(43) Date of publication:
**17.05.2023 Bulletin 2023/20**

(21) Application number: **21836860.3**

(22) Date of filing: **07.07.2021**

(51) International Patent Classification (IPC):
*H01M 4/13* (2010.01)    *H01M 4/139* (2010.01)
*H01M 4/62* (2006.01)    *C01B 32/16* (2017.01)
*C01B 32/174* (2017.01)

(52) Cooperative Patent Classification (CPC):
**C01B 32/16; C01B 32/174; H01M 4/13;
H01M 4/139; H01M 4/62; Y02E 60/10**

(86) International application number:
**PCT/JP2021/025560**

(87) International publication number:
**WO 2022/009915 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.07.2020 JP 2020116805
04.03.2021 JP 2021034455**

(71) Applicants:
• **Toyo Ink SC Holdings Co., Ltd.**
**Tokyo 104-8377 (JP)**

• **TOYOCOLOR CO., LTD.**
**Tokyo, 104-8381 (JP)**

(72) Inventors:
• **MORITA, Yu**
**Tokyo 104-8381 (JP)**
• **ITO, Hirotomo**
**Tokyo 104-8381 (JP)**
• **IZUMIYA, Tetsuro**
**Tokyo 104-8381 (JP)**

(74) Representative: **SSM Sandmair
Patentanwälte Rechtsanwalt
Partnerschaft mbB
Joseph-Wild-Straße 20
81829 München (DE)**

(54) **CARBON NANOTUBES, CARBON NANOTUBE DISPERSION LIQUID, AND NONAQUEOUS ELECTROLYTE SECONDARY BATTERY USING SAME**

(57) The present invention relates to carbon nanotubes which are characterized by satisfying the requirements (1) to (3) described below. (1) An aqueous dispersion liquid of the carbon nanotubes has a pH of from 8.0 to 10.0. (2) The BET specific surface area of the carbon nanotubes is from 200 to 800 $m^2$/g. (3) If Y is the average fiber length (nm) of the carbon nanotubes and X is the BET specific surface area ($m^2$/g) of the carbon nanotubes, X and Y satisfy Y = -aX + b (wherein a and b represent constants, while satisfying $2.2 \leq a \leq 3.5$ and $2,300 \leq b \leq 5,000$).

FIG. 1

**Description**

[Technical Field]

Embodiments of the present invention relate to carbon nanotubes and use thereof. More specifically, embodiments of the present invention relate to carbon nanotubes, a carbon nanotube dispersion liquid using the carbon nanotubes, a resin composition, a mixture slurry, an electrode film, a nonaqueous electrolyte secondary battery, and a vehicle.

[Background Art]

With the spread of electric vehicles, and miniaturization, weight reduction and performance improvement of portable devices, there are demands to provide secondary batteries with high energy density and to increase the capacity of such secondary batteries. In view of this, nonaqueous electrolyte secondary batteries using a nonaqueous electrolytic solution, particularly, lithium ion secondary batteries, have come to be used in many devices because of their high energy density and high voltage.

As a negative electrode material used in these lithium ion secondary batteries, a carbon material represented by graphite, which has a base potential close to that of lithium (Li) and has a large charging and discharging capacity per unit mass, is used. However, these electrode materials are already used at a level close to the theoretical value in the charging and discharging capacity per mass, and the energy density per mass of the battery is approaching its limit. Therefore, in order to increase the utilization rate of the electrode, there have been attempts to reduce the amount of conductivity aids or binders that do not contribute to the discharging capacity.

Carbon black, ketjen black, fullerene, graphene, fine carbon materials and the like are used as conductivity aids. Particularly, carbon nanotubes, which are a type of fine carbon fibers, are often used. For example, when carbon nanotubes are added to graphite or silicon negative electrodes, the electrode resistance can be reduced, the load resistance of the battery can be improved, the strength of the electrode can be increased, and expansion and contraction of the electrode can be increased, and thus the cycle lifespan of lithium secondary batteries is improved (for example, refer to Patent Literature 1, 2, and 3). In addition, studies are being conducted to reduce the electrode resistance by adding carbon nanotubes to the positive electrode (for example, refer to Patent Literature 4). Among these, multiwalled carbon nanotubes having an outer diameter of 10 nm to several tens of nm are relatively inexpensive and are expected to be put into practice.

When carbon nanotubes having a small average outer diameter are used, a conductive network can be efficiently formed with a small amount of carbon nanotubes so that the amount of conductivity aids contained in the positive electrode and negative electrode for the lithium ion secondary battery can be reduced. In addition, it is known that the same effects can be obtained when carbon nanotubes having a long fiber length are used (for example, refer to Patent Literature 6). However, carbon nanotubes having these properties have a strong cohesive force and are unlikely to disperse. Therefore, a carbon nanotube dispersion liquid having sufficient dispersibility could not be obtained.

Therefore, methods of stabilizing dispersion of carbon nanotubes using various dispersants have been proposed. For example, dispersion in water and N-methyl-2-pyrrolidone (NMP) using a polymer-based dispersant such as the water-soluble polymer polyvinylpyrrolidone has been proposed (refer to Patent Literature 4 and 5). However, in Patent Literature 4, an electrode produced using carbon nanotubes having an outer diameter of 10 to 150 nm is evaluated, but there is a problem of the electrode resistance increasing. In Patent Literature 5, a dispersion liquid using single-walled carbon nanotubes has been studied, but it is difficult to disperse carbon nanotubes in a solvent at a high concentration. In Patent Literature 7, a carbon nanotube dispersion liquid containing triazine derivatives having an acidic functional group has been proposed, but there is a problem of the carbon nanotubes being easily aggregated when the carbon nanotubes are dispersed in an aqueous liquid medium. In Patent Literature 8, dispersion using double-walled carbon nanotubes has been studied. However, it was necessary to perform an oxidation treatment and ultrasonic dispersion on carbon nanotubes and it was difficult to disperse the carbon nanotubes in a solvent at a high concentration. In Patent Literature 9, in order to obtain carbon nanotubes suitable as a conductivity aid for lithium ion secondary batteries, a carbon nanotube dispersion liquid in which carbon nanotubes having an outer diameter of 150 nm are dispersed at about 2 to 7 $\mu$m is produced using a ball mill type disperser. However, in order to obtain sufficient conductivity, it was necessary to use a large amount of carbon nanotubes.

Therefore, obtaining a carbon nanotube dispersion liquid in which carbon nanotubes having a small outer diameter and a long fiber length are uniformly dispersed in a dispersion medium at a high concentration is an important issue for more applications.

[Citation List]

[Patent Literature]

[Patent Literature 1]
Japanese Patent Laid-Open No. H4-155776
[Patent Literature 2]
Japanese Patent Laid-Open No. H4-237971
[Patent Literature 3]
Japanese Patent Laid-Open No. 2004-178922
[Patent Literature 4]
Japanese Patent Laid-Open No. 2011-70908
[Patent Literature 5]
Japanese Patent Laid-Open No. 2005-162877
[Patent Literature 6]
Japanese Patent Laid-Open No. 2012-221672
[Patent Literature 7]
Japanese Patent Laid-Open No. 2020-11872
[Patent Literature 8]
Japanese Patent Laid-Open No. 2010-254546
[Patent Literature 9]
Japanese Patent Laid-Open No. 2014-182892

[Summary of Invention]

[Technical Problem]

In view of the above circumstances, one embodiment of the present invention provides carbon nanotubes that can be suitably used as a conductivity aid and have excellent dispersibility. In addition, another embodiment of the present invention provides carbon nanotubes having high dispersibility, a carbon nanotube dispersion liquid, a carbon nanotube resin composition, and a mixture slurry, in order to obtain an electrode film having improved adhesion and conductivity. In addition, another embodiment of the present invention provides a nonaqueous electrolyte secondary battery having an excellent rate property and cycle property.

[Solution to Problem]

In order to address the above problems, the inventors of the present invention conducted extensive studies. As a result, the inventors found that, when carbon nanotubes in which the pH is 8.0 to 10.0, the BET specific surface area is 200 to 800 $m^2/g$, and $Y=-aX+b$ (a and b are constants, $2.2\leq a\leq 3.5$, $2,300\leq b\leq 5,000$) when the fiber length (nm) of the carbon nanotubes is Y, and the BET specific surface area ($m^2/g$) of the carbon nanotubes is X are used, desired properties can be obtained. That is, it has been found that, when the specific carbon nanotubes are used, an electrode film having excellent conductivity and adhesion and a nonaqueous electrolyte secondary battery having an excellent rate property and cycle property can be easily obtained. The inventors have completed the present invention based on these findings.

That is, one embodiment of the present invention relates to carbon nanotubes that satisfy all of the following (1) to (3):

(1) the pH of a carbon nanotube aqueous dispersion liquid is 8.0 to 10.0.
(2) the BET specific surface area of the carbon nanotubes is 200 to 800 $m^2/g$.
(3) $Y=-aX+b$ (a and b are constants, $2.2\leq a\leq 3.5$, $2,300<\_b<\_5,000$) when the fiber length (nm) of the carbon nanotubes is Y, and the BET specific surface area ($m^2/g$) of the carbon nanotubes is X.

In the carbon nanotubes of the above embodiment, in a Raman spectrum of the carbon nanotubes, preferably, the G/D ratio is 0.5 to 4.5 when the maximum peak intensity in a range of 1,560 to 1,600 $cm^{-1}$ is G, and the maximum peak intensity in a range of 1,310 to 1,350 $cm^{-1}$ is D.
In the above embodiment, preferably, the average outer diameter of the carbon nanotubes is 5 to 20 nm.

In the above embodiment, preferably, the volume resistivity of the carbon nanotubes is $1.0\times10^{-2}$ to $3.0\times10^{-2}$ $\Omega\cdot$cm.

Another embodiment of the present invention relates to a carbon nanotube dispersion liquid containing the carbon nanotubes of the above embodiment, a dispersant, and an aqueous liquid medium.

In the carbon nanotube dispersion liquid of the above embodiment, preferably, the complex modulus of elasticity of the carbon nanotube dispersion liquid is 1 to 100 Pa.

In the carbon nanotube dispersion liquid of the above embodiment, preferably, the product ($X\times Y$) of the complex modulus of elasticity X (Pa) and the phase angle Y(°) of the carbon nanotube dispersion liquid is 100 or more and 1,500 or less.

Preferably, the carbon nanotube dispersion liquid of the above embodiment contains 10 to 100 parts by mass of the dispersant with respect to 100 parts by mass of the carbon nanotubes.

Preferably, the pH of the carbon nanotube dispersion liquid of the above embodiment is 7 to 11.

In the carbon nanotube dispersion liquid of the above embodiment, preferably, the 50% particle size (D50) calculated according to laser diffraction particle size distribution measurement is 1 to 20 $\mu$m.

The carbon nanotube dispersion liquid of the above embodiment is a dispersion liquid containing 0.4 parts by mass or more and 2.5 parts by mass or less of carbon nanotubes in 100 parts by mass of the carbon nanotube dispersion liquid, and in which, when the viscosity of the carbon nanotube dispersion liquid measured at 6 rpm using a B type viscometer is $\alpha$, and the viscosity of the carbon nanotube dispersion liquid measured at 60 rpm is $\beta$, preferably, $\alpha/\beta$ satisfies $2.0\leq\alpha/\beta\leq6.0$.

Another embodiment of the present invention relates to a carbon nanotube resin composition containing the carbon nanotube dispersion liquid of the above embodiment and a binder resin.

In the carbon nanotubes of the above embodiment resin composition, preferably, the binder resin includes at least one selected from the group consisting of carboxymethyl cellulose, styrene butadiene rubber, and polyacrylic acid.

Another embodiment of the present invention relates to a mixture slurry containing the carbon nanotubes of the above embodiment resin composition and an active material.

Another embodiment of the present invention relates to an electrode film which is a coating film of the mixture slurry of the above embodiment.

Another embodiment of the present invention relates to a nonaqueous electrolyte secondary battery including a positive electrode, a negative electrode, and an electrolyte, and in which at least one of the positive electrode and the negative electrode includes the electrode film of the above embodiment.

Another embodiment of the present invention relates to a nonaqueous electrolyte secondary battery including the carbon nanotubes of the above embodiment.

Another embodiment of the present invention relates to a vehicle including the nonaqueous electrolyte secondary battery of the above embodiment.

Priority is claimed on Japanese Patent Application No. 2020-116805, filed July 7, 2020, and Japanese Patent Application No. 2021-034455, filed March 4, 2021, the content of which is incorporated herein by reference.

[Advantageous Effects of Invention]

According to the embodiments of the present invention, a resin composition, a mixture slurry, and an electrode film having excellent conductivity and adhesion can be obtained using specific carbon nanotubes that satisfy specific requirements regarding the pH, BET surface area, and average fiber length. In addition, a nonaqueous electrolyte secondary battery having an excellent rate property and cycle property can be obtained. According to the present invention, it is possible to provide carbon nanotubes and a carbon nanotube dispersion liquid that can be suitably used in various application fields such as a vehicle for which an excellent nonaqueous secondary electrolyte secondary battery is required.

[Brief Description of Drawings]

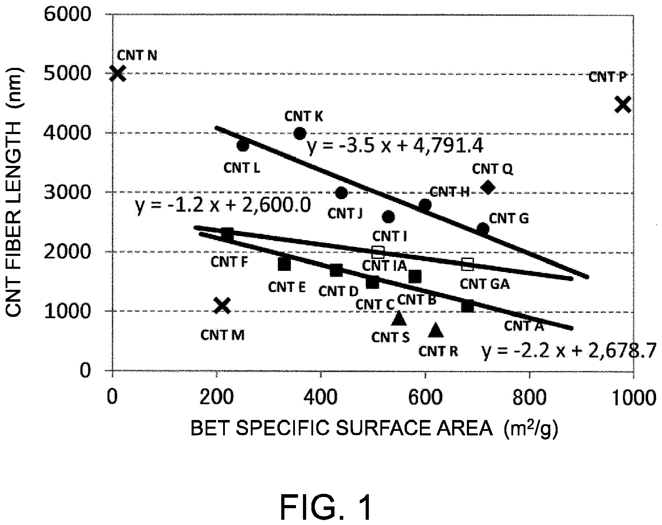

Fig. 1 is a graph showing the relationship between the BET specific surface area and the CNT fiber length of carbon nanotubes (CNT) produced in examples of the present invention and carbon nanotubes (CNT) used in comparative examples and a reference example.

[Description of Embodiments]

Hereinafter, as examples of embodiments of the present invention, carbon nanotubes, a carbon nanotube dispersion liquid, a resin composition, a mixture slurry, an electrode film obtained by forming a mixture slurry into a film, and a nonaqueous electrolyte secondary battery will be described in detail. However, the present invention is not limited to the following description and includes various embodiments.

<Carbon nanotubes>

Carbon nanotubes according to one embodiment of the present invention have a shape in which flat graphite is wound into a cylindrical shape. The carbon nanotubes may be a mixture of single-walled carbon nanotubes. Single-walled carbon nanotubes have a structure in which one layer of graphite is wound. Multiwalled carbon nanotubes have a structure in which two, three or more layers of graphite are wound. In addition, the side wall of the carbon nanotubes does not have a graphite structure. For example, carbon nanotubes with side walls having an amorphous structure can be used as the carbon nanotubes.

The shape of the carbon nanotubes of the present embodiment is not limited. Examples of shapes may include various shapes including a needle shape, a cylindrical tube shape, a fishbone shape (fishbone or cup-stacked shape), and a coil shape. In the present embodiment, among these, the shape of carbon nanotubes is preferably a needle shape or a cylindrical tube shape. The carbon nanotubes may have a single shape or a combination of two or more shapes.

Examples of forms of carbon nanotubes of the present embodiment include a graphite whisker, filamentous carbon, graphite fibers, ultrafine carbon tubes, carbon tubes, carbon fibrils, carbon microtubes and carbon nanofibers. However, the forms are not limited thereto. The carbon nanotubes may have a single form or a combination of two or more forms.

The pH of the aqueous dispersion liquid containing the carbon nanotubes of the present embodiment is 8.0 to 10.0, and more preferably 8.5 to 9.5. Here, the pH of the aqueous dispersion liquid containing carbon nanotubes is a value obtained by measuring the pH of an aqueous dispersion liquid produced by adding 1 part by mass of carbon nanotubes to 100 parts by mass of deionized water and then performing a dispersion treatment using an ultrasonic homogenizer.

In one embodiment, the aqueous dispersion liquid used during the above specifying may be, for example, an aqueous dispersion liquid prepared as follows. First, 2 g of carbon nanotubes, and 200 mL of deionized water are weighed out. Next, these are dispersed for 1 minute under ice cooling using an ultrasonic homogenizer. Next, the sample is left at room temperature (25°C) for 1 hour or longer.

During the measurement, it is preferable to separate CNTs from water by centrifuging or filtering the aqueous dispersion liquid and perform measurement. Carbon nanotubes having a pH of 8.0 to 10.0 in the aqueous dispersion liquid have high wettability with respect to a water-soluble liquid medium represented by water or NMP. Therefore, when the pH of the aqueous CNT dispersion liquid is within the above range, it is easy to obtain excellent dispersibility in the water-soluble liquid medium. Therefore, when the pH of the aqueous dispersion liquid is within the above range, use as carbon nanotubes for nonaqueous electrolyte secondary batteries can be suitable.

The BET specific surface area of the carbon nanotubes of the present embodiment may be 200 to 800 $m^2/g$. In one embodiment, the BET specific surface area is more preferably 250 to 750 $m^2/g$ and still more preferably 300 to 700 $m^2/g$.

When carbon nanotubes having a BET specific surface area of 200 $m^2/g$ or more are used, a highly conductive electrode film can be easily obtained with a small amount of carbon nanotubes. On the other hand, when carbon nanotubes having a BET specific surface area of 800 $m^2/g$ or less are used, it is possible to easily obtain defibrated carbon nanotubes while minimizing breakage. Therefore, when the BET specific surface area of the carbon nanotubes is within a range of 200 to 800 $m^2/g$, it is easy to form a developed conductive network and improve the conductivity of the electrode film.

Although not particularly limited, in one embodiment, the BET specific surface area may be 200 to 400 $m^2/g$, 401 to 600 $m^2/g$, or 601 to 800 $m^2/g$.

The average fiber length of the carbon nanotubes of the present embodiment is preferably 700 nm or more and more preferably 1,000 nm or more. In one embodiment, the average fiber length may be 1,200 nm or more. On the other hand, the average fiber length is preferably less than 5,000 nm and more preferably 4,000 nm or less. In one embodiment, the average fiber length may be less than 2,000 nm.

When carbon nanotubes having an average fiber length of 700 nm or more are used, there is a tendency to easily improve expansion and contraction and a cycle property of the electrode. In addition, when carbon nanotubes having an average fiber length of less than 5,000 nm are used, there is a tendency that it becomes easier to minimize the occurrence of aggregation or breakage of carbon nanotubes and to provide an electrode having excellent conductivity.

In one embodiment, the average fiber length of the carbon nanotubes is more preferably 1,000 nm or more and less than 5,000 nm, and may be 1,000 nm or more and less than 2,000 nm, or 2,000 nm or more and less than 4,000 nm. In another embodiment, the average fiber length of the carbon nanotubes is more preferably 1,000 nm or more and less than 5,000 nm, and may be 1,500 nm or more and less than 4,000 nm.

As described above, since the average fiber length and BET specific surface area of the carbon nanotubes influence the conductivity of the electrode and a rate property and a cycle property of the battery, they are preferably appropriately selected within the above numerical value range. On the other hand, according to studies by the inventors, it has found that the values of the average fiber length and the BET specific surface area of the carbon nanotubes can be defined by the following formula.

That is, when the average fiber length (nm) of the carbon nanotubes is Y, and the BET specific surface area (m$^2$/g) of the carbon nanotubes is X, the carbon nanotubes of the present embodiment satisfy the following (Formula 1).

$$\text{(Formula 1) } Y = -aX + b$$

In Formula 1, a and b are constants, and $2.2 \leq a \leq 3.5$, 2, $300 \leq b \leq 5,000$, and preferably $2,600 \leq b \leq 4,800$.

The carbon nanotubes of the present embodiment more preferably satisfy the following (Formula 2).

$$\text{(Formula 2) } Y = -aX + b$$

In Formula 2, a and b are constants, and $1.2 \leq a \leq 3.5$, and $2,600 \leq b \leq 4,000$.

As described above, when the average fiber length (nm) of the carbon nanotubes is Y and the BET specific surface area (m$^2$/g) of the carbon nanotubes is X, Formula 1 and Formula 2 show a correlation, which means that there are constants a and b that make both sides of the formula equal for the values of the average fiber length "Y" and the BET specific surface area "X."

In one embodiment, a may be a constant of 1.2 or more and less than 2.2 or a constant of 2.2 or more and 3.5 or less. b may be a constant of 2,300 or more and less than 3,300 or a constant of 3,300 or more and 5,000 or less.

When carbon nanotubes in which the above constants a and b are within the above range are used, it is possible to easily obtain properties such as a high output and a long lifespan of the battery.

In one embodiment, when the average fiber length (nm) of the carbon nanotubes is Y and the BET specific surface area (m$^2$/g) of the carbon nanotubes is X, it is preferable to satisfy -3.5X+2,300<Y and Y<-2.2X+5,000. The carbon nanotubes more preferably satisfy the following (Formula 3).

$$\text{(Formula 3)}$$

$$-3.5X + 2,300 < Y < -2.2X + 5,000$$

In one embodiment, the carbon nanotubes more preferably satisfy the following (Formula 3').

$$\text{(Formula 3')}$$

$$-3.5X + 2,600 < Y < -2.2X + 4,800$$

Examples of carbon nanotubes that satisfy (Formula 1) include the following carbon nanotubes (CNT) produced in examples to be described below.

CNT (A): a BET specific surface area of 680 (m$^2$/g) and an average fiber length of 1,100 nm
CNT (B): a BET specific surface area of 580 (m$^2$/g) and an average fiber length of 1,600 nm
CNT (C): a BET specific surface area of 500 (m$^2$/g) and an average fiber length of 1,500 nm
CNT (D): a BET specific surface area of 430 (m$^2$/g) and an average fiber length of 1,700 nm
CNT (E): a BET specific surface area of 330 (m$^2$/g) and an average fiber length of 1,800 nm
CNT (F): a BET specific surface area of 220 (m$^2$/g) and an average fiber length of 2,300 nm
CNT (G): a BET specific surface area of 710 (m$^2$/g) and an average fiber length of 2,400 nm
CNT (H): a BET specific surface area of 600 (m$^2$/g) and an average fiber length of 2,800 nm
CNT (I): a BET specific surface area of 530 (m$^2$/g) and an average fiber length of 2,600 nm
CNT (J): a BET specific surface area of 440 (m$^2$/g) and an average fiber length of 3,000 nm
CNT (K): a BET specific surface area of 360 (m$^2$/g) and an average fiber length of 4,000 nm
CNT (L): a BET specific surface area of 250 (m$^2$/g) and an average fiber length of 3,800 nm
CNT (GA): a BET specific surface area of 680 (m$^2$/g) and an average fiber length of 1,800 nm
CNT (IA): a BET specific surface area of 510 (m$^2$/g) and an average fiber length of 2,000 nm
CNT (Q): a BET specific surface area of 720 (m$^2$/g) and an average fiber length of 3,100 nm

CNT (R): a BET specific surface area of 620 (m$^2$/g) and an average fiber length of 700 nm
CNT (S): a BET specific surface area of 550 (m$^2$/g) and an average fiber length of 900 nm

However, the carbon nanotubes of the present embodiment are not limited thereto, and may be any carbon nanotube as long as it satisfies all of the requirements (1) to (3) described above.

The carbon nanotubes are evaluated by a G/D ratio (peak ratio of G-band and D-band). The G/D ratio of the carbon nanotubes of the present embodiment is determined through Raman spectroscopy. In the carbon nanotubes of the present embodiment, in the Raman spectrum, the G/D ratio is preferably 0.5 to 10 when the maximum peak intensity in a range of 1,560 to 1,600 cm$^{-1}$ is G and the maximum peak intensity in a range of 1,310 to 1,350 cm$^{-1}$ is D. The G/D ratio is more preferably 0.5 to 4.5, and still more preferably 0.5 to 2.0.

The average outer diameter of the carbon nanotubes of the present embodiment is preferably 5 to 25 nm, more preferably 5 to 20 nm, and still more preferably 5 to 15 nm.

The outer diameter and the average outer diameter of the carbon nanotubes of the present embodiment are obtained as follows. First, carbon nanotubes are observed and imaged using a transmission electron microscope. Next, in the observed image, 300 arbitrary carbon nanotubes are selected, and the outer diameters thereof are measured. Next, the average outer diameter (nm) of the carbon nanotubes is calculated as the number average of the outer diameter.

For the carbon nanotubes of the present embodiment, the number of carbon nanotube layers is preferably 3 or more and 30 or less, more preferably 3 or more and 20 or less, and still more preferably 3 or more and 10 or less.

When the carbon nanotubes of the present embodiment are subjected to powder X-ray diffraction analysis, there is a peak at an angle of diffraction $2\theta=25°\pm2°$, and the half-price width of the peak is preferably 2° or more and less than 6°, more preferably 2.5° or more and less than 6°, and still more preferably 3° or more and less than 6°.

The volume resistivity of the carbon nanotubes of the present embodiment is preferably $1.0\times10^{-2}$ to $3.0\times10^{-2}$ $\Omega\cdot$cm and more preferably $1.0\times10^{-2}$ to $2.0\times10^{-2}$ $\Omega\cdot$cm. The volume resistivity of the carbon nanotubes can be measured using a powder resistivity measuring device (Loresta GP powder resistivity measurement system MCP-PD-51, commercially available from Mitsubishi Chemical Analytech Co., Ltd.).

The carbon purity of the carbon nanotubes of the present embodiment is represented by the content (%) of carbon atoms in the carbon nanotubes. The carbon purity is preferably 90 mass% or more, more preferably 95 mass% or more, and still more preferably 98 mass% or more with respect to 100 mass% of the carbon nanotubes.

The amount of metal contained in the carbon nanotubes of the present embodiment with respect to 100 mass% of the carbon nanotubes is preferably less than 10 mass%, more preferably less than 5 mass%, and still more preferably less than 2 mass%. Metals contained in carbon nanotubes include metals or metal oxides used as a catalyst when the carbon nanotubes are synthesized. Specific examples thereof include metals such as cobalt, nickel, aluminum, magnesium, silica, manganese and molybdenum, metal oxides, and composite oxides thereof.

The carbon nanotubes of the present embodiment are generally present as secondary particles. The shape of the secondary particles may be, for example, a form in which carbon nanotubes, which are general primary particles, are intricately entangled. It may be an aggregate in which the carbon nanotubes are linearly arranged. Secondary particles, which are aggregates of linear carbon nanotubes, are easier to disentangle than the form in which carbon nanotubes are entangled. In addition, since the linear form has better dispersibility than the entangled form, it can be suitably used as the carbon nanotubes.

The carbon nanotubes of the present embodiment may be surface-treated carbon nanotubes. In addition, the carbon nanotubes may be carbon nanotube derivatives to which a functional group represented by a carboxyl group is added. In addition, carbon nanotubes containing substances represented by organic compounds, metal atoms, or fullerenes can be used.

The carbon nanotubes of the present embodiment may be carbon nanotubes produced by any method. Carbon nanotubes can be generally produced by a laser ablation method, an arc discharging method, a thermal CVD method, a plasma CVD method, and a combustion method, but the present invention is not limited thereto. For example, carbon nanotubes can be produced by contact-reacting a carbon source with a catalyst in an atmosphere with an oxygen concentration of 1 volume% or less at 500 to 1,000°C. The carbon source may be at least any one of hydrocarbons and alcohols.

Any conventionally known gas can be used as a source gas for a carbon nanotube carbon source. For example, as a source gas containing carbon, hydrocarbons represented by methane, ethylene, propane, butane and acetylene, carbon monoxide, and alcohols can be used, but the present invention is not limited thereto. Particularly, in consideration of ease of use, it is desirable to use at least any one of hydrocarbons and alcohols as a source gas.

<Carbon nanotube dispersion liquid>

A carbon nanotube dispersion liquid according to one embodiment of the present invention contains carbon nanotubes, a dispersant, and an aqueous liquid medium. Details will be described below.

(Dispersant)

The dispersant of the present embodiment is not particularly limited as long as it can stabilize dispersion of the carbon nanotubes. For example, a surfactant and a resin type dispersant can be used. Surfactants are mainly classified into anionic surfactants, cationic surfactants, nonionic surfactants and amphoteric surfactants. A suitable type of dispersant can be appropriately used in a suitable blending amount depending on properties required for dispersing the carbon nanotubes.

When an anionic surfactant is selected, the type thereof is not particularly limited. Specific examples thereof include fatty acid salts, polysulfonates, polycarboxylates, alkyl ether sulfate, alkyl aryl sulfonate, alkyl naphthalene sulfonate, dialkyl sulfonate, dialkyl sulfosuccinate, alkyl phosphate, polyoxyethylene alkyl ether sulfate, polyoxyethylene alkyl aryl ether sulfate, naphthalenesulfonic acid formalin condensate, polyoxyethylene alkyl phosphate sulfonate, glycerol borate fatty acid ester and polyoxyethylene glycerol fatty acid ester, but the present invention is not limited thereto. More specific examples thereof include sodium dodecylbenzenesulfonate, sodium lauryl sulfate, sodium polyoxyethylene lauryl ether sulfate, polyoxyethylene nonylphenyl ether sulfate salts and sodium salts of β-naphthalenesulfonic acid formalin condensate, but the present invention is not limited thereto.

In addition, cationic surfactants include alkylamine salts and quaternary ammonium salts. Specific examples thereof include stearylamine acetate, coconut trimethyl ammonium chloride, tallow trimethyl ammonium chloride, dimethyl dioleyl ammonium chloride, methyloleyldiethanol chloride, tetramethyl ammonium chloride, lauryl pyridinium chloride, lauryl pyridinium bromide, lauryl pyridinium disulfate, cetylpyridinium bromide, 4-alkylmercaptopyridine, poly(vinylpyridine)-dodecyl bromide and dodecylbenzyltriethylammonium chloride, but the present invention is not limited thereto. In addition, examples of amphoteric surfactants include aminocarboxylate, but the present invention is not limited thereto.

In addition, examples of nonionic surfactants include polyoxyethylene alkyl ether, polyoxyalkylene derivatives, polyoxyethylene phenyl ether, sorbitan fatty acid ester, polyoxyethylene sorbitan fatty acid ester and alkyl allyl ether, but the present invention is not limited thereto. Specific examples thereof include polyoxyethylene lauryl ether, sorbitan fatty acid ester and polyoxyethylene octylphenyl ether, but the present invention is not limited thereto.

The selected surfactant is not limited to a single surfactant. Therefore, it is possible to use a combination of two or more surfactants. For example, a combination of an anionic surfactant and a nonionic surfactant or a combination of a cationic surfactant and a nonionic surfactant can be used. The blending amount in this case is preferably a blending amount suitable for each surfactant component. As the combination, a combination of an anionic surfactant and a nonionic surfactant is preferable. The anionic surfactant is preferably a polycarboxylate. The nonionic surfactant is preferably polyoxyethylene phenyl ether.

In addition, specific examples of resin type dispersants include cellulose derivatives (cellulose acetate, cellulose acetate butyrate, cellulose butyrate, cyanoethyl cellulose, ethyl hydroxyethyl cellulose, nitro cellulose, methyl cellulose, ethyl cellulose, hydroxyethyl cellulose, hydroxypropyl cellulose, hydroxypropyl methyl cellulose, carboxymethyl cellulose, etc.), polyvinyl alcohol, polyvinyl butyral, polyvinylpyrrolidone, and polyacrylonitrile polymers. Particularly, methyl cellulose, ethyl cellulose, carboxymethyl cellulose, polyvinyl alcohol, polyvinyl butyral, polyvinylpyrrolidone, and polyacrylonitrile polymers are preferable. The molecular weight of the resin type dispersant is preferably 10,000 to 150,000, and more preferably 10,000 to 100,000.

In addition, it is preferable to add an amine compound or an inorganic base in addition to the dispersant. As amine compounds, primary amines, secondary amines, and tertiary amines are used, and ammonia and quaternary ammonium compounds are not included. As the amine-based compounds, in addition to monoamines, amine-based compounds such as diamines, triamines, and tetramines having a plurality of amino groups in the molecule can be used. Specific examples thereof include aliphatic primary amines such as methylamine, ethylamine, butylamine, and octylamine, aliphatic secondary amines such as dimethylamine, diethylamine, and dibutylamine, aliphatic tertiary amines such as trimethylamine, triethylamine, and dimethyloctylamine, amino acids such as alanine, methionine, proline, serine, asparagine, glutamine, lysine, arginine, histidine, aspartic acid, glutamic acid, and cysteine, alkanolamines such as dimethylaminoethanol, monoethanolamine, diethanolamine, methylethanolamine, and triethanolamine, and alicyclic nitrogen-containing heterocyclic compounds such as hexamethylenetetramine, morpholine, and piperidine, but the present invention is not limited thereto. Examples of inorganic bases include alkali metal hydroxides, alkaline earth metal hydroxides, alkali metal carbonates, alkaline earth metal carbonates, alkali metal phosphates, and alkaline earth metal phosphates.

In addition, a defoaming agent may be added in addition to the dispersant. The defoaming agent can be arbitrarily used as long as it has a defoaming effect such as commercially available defoaming agents, wetting agents, hydrophilic organic solvents, and water-soluble organic solvents, and one type thereof may be used or a plurality thereof may be used in combination.

Examples thereof include; alcohols such as ethanol, propanol, isopropanol, butanol, octyl alcohol, hexadecyl alcohol, acetylene alcohol, ethylene glycol monobutyl ether, methyl cellosolve, butyl cellosolve, propylene glycol monomethyl ether, acetylene glycol, polyoxyalkylene glycol, propylene glycol, and other glycols; fatty acid esters such as diethylene glycol laurate, glycerin monoricinoleate, alkenylsuccinic acid derivatives, sorbitol monolaurate, sorbitol trioleate, polyoxyethylene monolaurate, polyoxyethylene sorbitol monolaurate, and natural wax; amides such as polyoxyalkyleneamide and acrylate polyamine; phosphate esters such as tributyl phosphate and sodium octyl phosphate; metallic soaps such as aluminum stearate and calcium oleate; fats and oils such as animal and vegetable oils, sesame oil, and castor oil; mineral oils such as kerosene and paraffin; and silicones such as dimethyl silicone oil, silicone paste, silicone emulsion, organic modified polysiloxane, and fluoro silicone oil.

(Aqueous liquid medium)

The aqueous liquid medium of the present embodiment is not particularly limited as long as carbon nanotubes can be dispersed therein. For example, it is preferable to contain water, and/or any of water-soluble organic solvents or a mixed solvent of two or more thereof, and more preferable to contain water. When water is contained, the content thereof with respect to the entire solvent is preferably 95 parts by mass or more and more preferably 98 parts by mass or more.

Examples of water-soluble organic solvents include alcohols (methanol, ethanol, propanol, isopropanol, butanol, isobutanol, secondary butanol, tertiary butanol, benzyl alcohol, etc.), polyhydric alcohols (ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, etc.), polyhydric alcohol ethers (ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monoethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, etc.), amines (ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethyl propylene diamine, etc.), amides (N-methyl-2-pyrrolidone(NMP), N-ethyl-2-pyrrolidone (NEP), N,N-dimethylformamide, N,N-dimethylacetamide, N,N-diethylacetamide, N-methylcaprolactam, etc.), heterocycles (cyclohexylpyrrolidone, 2-oxazolidone, 1,3-dimethyl-2-imidazolidinone, γ-butyrolactone, etc.), sulfoxides (dimethyl sulfoxide, etc.), sulfones (hexamethylphosphorotriamide, sulfolane, etc.), lower ketones (acetone, methyl ethyl ketone, etc.), and in addition, tetrahydrofuran, urea, acetonitrile and the like can be used.

(Properties of carbon nanotube dispersion liquid)

The complex modulus of elasticity of the carbon nanotube dispersion liquid of the present embodiment is preferably 1 to 100 Pa, more preferably 3 to 70 Pa, and still more preferably 5 to 50 Pa. In addition, the phase angle is preferably 5° or more and 60° or less, more preferably 5° or more and 40° or less, and still more preferably 10° or more and 35° or less. The complex modulus of elasticity and phase angle measurements of carbon nanotubes can be evaluated by dynamic viscoelasticity measurement.

The complex modulus of elasticity indicates the hardness of the CNT dispersion liquid, and is smaller as the dispersibility of carbon nanotubes is better and the viscosity of the CNT dispersion liquid is lower. However, when the fiber length of the carbon nanotubes is long, even if the carbon nanotubes are uniformly and stably unraveled in a medium, the complex modulus of elasticity may be a high numerical value due to the structural viscosity of the carbon nanotube itself. In addition, the phase angle means the phase shift of the stress wave when the strain applied to the CNT dispersion liquid is a sine wave, that is, it indicates ease of flow of the dispersion liquid. In the case of a purely elastic component, since the sine wave has the same phase as the applied strain, the phase angle is 0°. On the other hand, in a purely viscous component, the stress wave advances by 90°. In a general sample for viscoelasticity measurement, if the sine wave has a phase angle of larger than 0° and smaller than 90°, and the dispersibility of CNTs in the CNT dispersion liquid is favorable, the phase angle approaches 90°, which is for a purely viscous component. However, like the complex modulus of elasticity, if the carbon nanotube itself has the structural viscosity, the phase angle may have a low numerical value even if the conductive material is uniformly and stably unraveled in a medium. The carbon nanotube dispersion liquid having the above range is suitable as a carbon nanotube dispersion liquid for a nonaqueous electrolyte secondary battery because the dispersed particle size and dispersibility of the carbon nanotubes are favorable.

The complex modulus of elasticity and phase angle of the carbon nanotube dispersion liquid are determined according to the dispersibility of the carbon nanotubes in the carbon nanotube dispersion liquid, the entanglement of the carbon nanotubes and the dispersant, or the influence of an intermolecular force thereof or the like. Therefore, when the complex modulus of elasticity X (Pa) and the phase angle Y(°) are within the above preferable ranges, and the product (X×Y) thereof is 100 or more and 1,500 or less, it is possible to obtain a carbon nanotube dispersion liquid having excellent dispersion stability, it is possible to form a better conductive network, and it is possible to obtain an electrode film having very good conductivity.

In addition, when the weight average molecular weight of the dispersant is 10,000 to 150,000, its viscoelasticity is low, but the product ($X \times Y$) of the complex modulus of elasticity X (Pa) and the phase angle Y(°) when used for a carbon nanotube dispersion liquid may be 100 or more and 1,500 or less. Such a dispersant can function as a thickener or a binder used for an electrode composition of a secondary battery, and is thought to improve the electrode strength and improve battery performance. It is not enough that the viscosity of the carbon nanotube dispersion liquid is low and the (apparent) dispersibility is good, but it is particularly effective to determine the state of dispersion by combining the complex modulus of elasticity and phase angle with a conventional index such as viscosity.

The amount of the dispersant used in the carbon nanotube dispersion liquid of the present embodiment with respect to 100 parts by mass of the carbon nanotubes is preferably 10 to 100 parts by mass, more preferably 20 to 80 parts by mass, and still more preferably 20 to 50 parts by mass.

The amount of carbon nanotubes in the carbon nanotube dispersion liquid of the present embodiment with respect to 100 parts by mass of the carbon nanotube dispersion liquid is preferably 0.2 to 20 parts by mass, more preferably 0.4 to 5 parts by mass, still more preferably 0.4 to 2.5 parts by mass, and particularly preferably 0.5 to 2.0 parts by mass.

The pH of the carbon nanotube dispersion liquid of the present embodiment is preferably 6 to 12, more preferably 7 to 11, and particularly preferably 8 to 10.5. The pH of the carbon nanotube dispersion liquid can be measured using a pH meter (pH METER F-52, commercially available from Horiba Ltd.).

The 50% particle size (D50) of the carbon nanotube dispersion liquid of the present embodiment calculated by a laser diffraction particle size distribution meter is preferably 1 to 20 $\mu$m and more preferably 3 to 15 $\mu$m.

For the viscosity of the carbon nanotube dispersion liquid of the present embodiment, the viscosity measured at 60 rpm using a B type viscometer is preferably less than 5,000 m Pa·s and more preferably less than 2,000 m Pa·s.

The carbon nanotube dispersion liquid of the present embodiment is a dispersion liquid containing 0.4 parts by mass or more and 2.5 parts by mass or less of carbon nanotubes in 100 parts by mass of the carbon nanotube dispersion liquid, and when the viscosity of the carbon nanotube dispersion liquid is measured using a B type viscometer, the viscosity measured at 6 rpm is $\alpha$, and the viscosity measured at 60 rpm is $\beta$, $\alpha/\beta$ is preferably $2.0 \leq \alpha/\beta \leq 6.0$.

In order to obtain the carbon nanotube dispersion liquid of the present embodiment, it is preferable to perform a treatment of dispersing carbon nanotubes in a solvent. The dispersing device used for such a treatment is not particularly limited.

As the dispersing device, a disperser that is generally used for pigment dispersion or the like can be used. Examples thereof include mixers such as a disper, a homomixer, and a planetary mixer, media type dispersers such as homogenizers (Advanced Digital Sonifer (registered trademark), MODEL 450DA, commercially available from BRANSON, "Crea Mix," commercially available from M Technique Co., Ltd., "Filmix" and the like, commercially available from PRIMIX, "Abramix" and the like, commercially available from Silverson Co., Ltd.), paint conditioners (commercially available from Red Devil), Colloid Mill ("PUC Colloid Mill," commercially available from PUC, "Colloid Mill MK," commercially available from IKA), Cone Mill ("Cone Mill MKO" and the like, commercially available from IKA), ball mill, sand mill ("Dyno-Mill," commercially available from Shinmaru Enterprises Corporation), attritor, pearl mill ("DCP mill" and the like, commercially available from Nippon Eirich Co., Ltd.), and coball mill, medialess dispersers such as high pressure homogenizers ("Genas PY," commercially available from Genas, "Starburst," commercially available from Sugino Machine Ltd., and "Nanomizer" and the like, commercially available from Nanomizer Inc.), "Clear SS-5," commercially available from M Technique Co., Ltd. and MICROS," commercially available from Nara Machinery Co., Ltd., and other roll mills, but the present invention is not limited thereto.

For the carbon nanotube dispersion liquid of the present embodiment, after shear stress is applied to the conductive material composition and the dispersion particle size is set to 250 $\mu$m or less, it is preferable to perform dispersion at a pressure of 60 MPa to 150 MPa using a high pressure homogenizer.

<Carbon nanotube resin composition>

A carbon nanotube resin composition according to one embodiment of the present invention contains carbon nanotubes, a dispersant, a solvent, and a binder resin. In one embodiment, the carbon nanotube resin composition may contain the carbon nanotube dispersion liquid of the above embodiment and a binder resin.

(Binder resin)

The binder resin is a resin that is present between substances such as carbon nanotubes.

Examples of binder resins of the present embodiment include polymers or copolymers containing ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal, vinylpyrrolidone or the like as a constituent unit; polyurethane resins, polyester resins, phenol resins, epoxy resins, phenoxy resins, urea resins, melamine resins, alkyd resins, acrylic resins, formaldehyde resins, silicon resins, and fluorine resins; cellulose resins such as carboxymethyl cellulose; rubbers such as styrene butadiene rubber and fluorine rubber; and conductive resins such as polyaniline and polyacetylene. In addition, modified products, mixtures, and copolymers of these resins may be used. Among these, carboxymethyl cellulose, styrene butadiene rubber, and polyacrylic acid are preferable.

Carboxymethyl cellulose as a binder resin preferably has a high viscosity, and for example, when a 1% aqueous solution is produced, the viscosity is preferably 500 to 6,000 m Pa·s, and more preferably 1,000 to 3,000 m Pa·s. The viscosity of a 1% aqueous solution containing carboxymethyl cellulose can be measured under a condition at 25°C using a B type viscometer rotor at a rotation speed of 60 rpm.

Carboxymethyl cellulose as a binder resin preferably has a high degree of etherification. For example, the degree of etherification is preferably 0.6 to 1.5, and more preferably 0.8 to 1.2.

The type and amount ratio of the binder resins are appropriately selected according to properties of coexisting substances such as carbon nanotubes and active materials. For example, regarding the amount of carboxymethyl cellulose used, when the mass of the graphite-based negative electrode active material and the silicon-based negative electrode active material is set as 100 mass%, the proportion of carboxymethyl cellulose is preferably 0.5 to 3.0 mass% and more preferably 1.0 to 2.0 mass%.

Styrene butadiene rubber that is generally used as a binding material for a graphite-based negative electrode can be used as long as it is an oil-in-water emulsion. Regarding the amount of the styrene butadiene rubber used, when the mass of the graphite-based negative electrode active material and the silicon-based negative electrode active material is set as 100 mass%, the proportion of the styrene butadiene rubber is preferably 0.5 to 3.0 mass% and more preferably 1.0 to 2.0 mass%.

Regarding the amount of polyacrylic acid used, when the mass of the graphite-based negative electrode active material and the silicon-based negative electrode active material is set as 100 mass%, the proportion of polyacrylic acid is preferably 1 to 25 mass% and more preferably 5 to 20 mass%.

In order to obtain the carbon nanotube resin composition of the present embodiment, it is preferable to mix the carbon nanotube dispersion liquid and the binder resin and homogenize the mixture. As a mixing method, various conventionally known methods can be used. The carbon nanotube resin composition can be produced using the dispersing device described for the carbon nanotube dispersion liquid.

<Mixture slurry>

A mixture slurry according to one embodiment of the present invention contains carbon nanotubes, a dispersant, an aqueous liquid medium, a binder resin, and an active material.

The carbon nanotubes include at least the carbon nanotubes of the above embodiment. The dispersant, aqueous liquid medium, and binder resin are as described above.

<Active material>

The active material of the present embodiment is a material that serves as a basis for the battery reaction. Active materials are classified into a positive electrode active material and a negative electrode active material according to the electromotive force.

The positive electrode active material is not particularly limited, but metal compounds such as metal oxides and metal sulfides that can dope or intercalate lithium ions, conductive polymers and the like can be used.

Examples thereof include oxides of transition metals such as Fe, Co, Ni, and Mn, composite oxides with lithium, and inorganic compounds such as transition metal sulfides. Specific examples thereof include transition metal oxide powders such as MnO, $V_2O_5$, $V_6O_{13}$, and $TiO_2$, composite oxide powders of lithium such as layered-structure lithium nickelate, lithium cobaltate, or lithium manganate, and spinel-structure lithium manganite and transition metals, and transition metal sulfide powders such as a lithium iron phosphate material which is an olivine-structure phosphate compound, $TiS_2$, and FeS. In addition, conductive polymers such as polyaniline, polyacetylene, polypyrrole, and polythiophene can be used. In addition, mixtures of the above inorganic compounds or organic compounds may be used.

The negative electrode active material is not particularly limited as long as it can dope or intercalate lithium ions. Examples thereof include metal Li, and its alloys such as tin alloys, silicon alloys, and lead alloys, metal oxide materials such as $LixFe_2O_3$, $Li_xFe_3O_4$, $LX_XWO_2$ (x is a number of 0<x<1), lithium titanate, lithium vanadate, and lithium silicate, conductive polymer materials such as polyacetylene and poly-p-phenylene, amorphous carbonaceous materials such as soft carbon and hard carbon, carbonaceous powders such as artificial graphite such as highly-graphitized carbon materials and natural graphite, and carbon-based materials such as carbon black, mesophase carbon black, resin-baked carbon materials, vapor grown carbon fibers, and carbon fibers. These negative electrode active materials can be used alone or a plurality thereof can be used in combination.

In one embodiment, as the negative electrode active material, it is preferable to use a graphite-based negative electrode active material together in addition to the silicon-based negative electrode active material.

As the silicon-based negative electrode active material, examples thereof include so-called metallurgical grade silicon produced by reducing silicon dioxide with carbon, industrial grade silicon obtained by reducing impurities from metallurgical grade silicon by an acid treatment, unidirectional coagulation or the like, high-purity silicon with different crystalline states such as high-purity single crystal, polycrystalline, and amorphous states, produced from silane obtained by reacting silicon, and silicone obtained by making industrial grade silicon have a high purity by a sputtering method or an EB vapor deposition (electron beam vapor deposition) method, and adjusting the crystalline state or precipitation state at the same time.

In addition, examples thereof include silicon oxide, which is a compound of silicon and oxygen, and silicon compounds containing silicon and various alloys and of which the crystalline state is adjusted by a rapid cooling method or the like. Among these, a silicon-based negative electrode active material having a structure of which the outside is coated with a carbon film and in which silicon nanoparticles are dispersed in silicon oxide is preferable.

The amount of the silicon-based negative electrode active material with respect to 100 mass% of the graphite-based negative electrode active material is preferably 3 to 50 mass%, and more preferably 5 to 25 mass%.

The BET specific surface area of the active material of the present embodiment is preferably 0.1 to 10 $m^2/g$, more preferably 0.2 to 5 $m^2/g$, and still more preferably 0.3 to 3 $m^2/g$.

The average particle size of the active material of the present embodiment is preferably in a range of 0.5 to 50 $\mu$m and more preferably 2 to 20 $\mu$m. The average particle size of the active material referred to in this specification is an average value of the particle sizes of the active material measured with an electron microscope.

(Method of producing mixture slurry)

The mixture slurry of the present embodiment can be produced by various conventionally known methods. For example, a production method of adding an active material to a carbon nanotube resin composition and a production method of adding an active material to a carbon nanotube dispersion liquid and then adding a binder resin may be exemplified.

In order to obtain a mixture slurry of the present embodiment, it is preferable to add an active material to a carbon nanotube resin composition and then perform a treatment for dispersion. A dispersing device used for performing such a treatment is not particularly limited. For the mixture slurry, a mixture slurry can be obtained using the dispersing device described in the above carbon nanotube dispersion liquid.

The amount of the active material in the mixture slurry of the present embodiment with respect to 100 parts by mass of the mixture slurry is preferably 20 to 80 parts by mass, more preferably 30 to 70 parts by mass, and still more preferably 40 to 60 parts by mass.

The amount of the carbon nanotubes in the mixture slurry of the present embodiment with respect to 100 parts by mass of the active material is preferably 0.05 to 5 parts by mass, more preferably 0.05 to 1 parts by mass, and still more preferably 0.1 to 0.5 parts by mass.

The amount of the binder resin in the mixture slurry of the present embodiment with respect to 100 parts by mass of the active material is preferably 0.5 to 30 mass%, more preferably 1 to 25 mass%, and particularly preferably 2 to 20 mass%.

The amount of the solid content in the mixture slurry of the present embodiment with respect to 100 mass% of the mixture slurry is preferably 30 to 90 mass%, more preferably 30 to 80 mass%, and still more preferably 40 to 70 mass%.

<Electrode film>

An electrode film according to one embodiment of the present invention is formed by forming the mixture slurry into a film. For example, a mixture slurry is applied and dried on a current collector, and thus a coating film in which an electrode mixture layer is formed is obtained.

The material and shape of the current collector used for the electrode film of the present embodiment is not particularly limited, and those suitable for various secondary batteries can be appropriately selected. For example, examples of materials of current collectors include metals such as aluminum, copper, nickel, titanium, and stainless steel, and alloys. In addition, regarding the shape, a flat plate-like foil is generally used, but a current collector with a roughened surface, a current collector having a perforated foil shape, and a current collector having a mesh shape can be used.

A method of applying a mixture slurry on the current collector is not particularly limited, and known methods can be used. Specific examples thereof include a die coating method, a dip coating method, a roll coating method, a doctor coating method, a knife coating method, a spray coating method, a gravure coating method, a screen printing method and an electrostatic coating method. Regarding the drying method, standing drying, a fan dryer, a warm air dryer, an infrared heater, a far infrared heater and the like can be used. However, the drying method is not particularly limited thereto.

In addition, after coating, rolling may be performed using a planographic press, a calendar roll or the like. The thickness of the electrode mixture layer is generally 1 $\mu$m or more and 500 $\mu$m or less, and preferably 10 $\mu$m or more and 300 $\mu$m or less.

<Nonaqueous electrolyte secondary battery>

The nonaqueous electrolyte secondary battery of the present embodiment includes a positive electrode, a negative electrode, and an electrolyte.

Regarding the positive electrode, those obtained by applying and drying a mixture slurry containing a positive electrode active material on a current collector to produce an electrode film can be used.

Regarding the negative electrode, those obtained by applying and drying a mixture slurry containing a negative electrode active material on a current collector to produce an electrode film can be used.

Regarding the electrolyte, various conventionally known electrolytes in which ions can move can be used. Examples thereof include those containing lithium salts such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, LiAlCl, $LiHF_2$, LiSCN, and $LiBPh_4$ (where, Ph is a phenyl group), but the present invention is not limited thereto, and those containing sodium salts can be used. The electrolyte is preferably dissolved in a nonaqueous solvent and used as an electrolytic solution.

The nonaqueous solvent is not particularly limited, and examples thereof include carbonates such as ethylene carbonate, propylene carbonate, butylene carbonate, dimethyl carbonate, ethyl methyl carbonate, and diethyl carbonate; lactones such as $\gamma$-butyrolactone, $\gamma$-valerolactone, and $\gamma$-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane and 1,2-dibutoxyethane; esters such as methylformate, methylacetate, and methylpropionate; sulfoxides such as dimethyl sulfoxide and sulfolane; and nitriles such as acetonitrile. These solvents may be used alone or two or more thereof may be used in combination.

The nonaqueous electrolyte secondary battery of the present embodiment preferably contains a separator. Examples of separators include a polyethylene non-woven fabric, a polypropylene non-woven fabric, a polyamide non-woven fabric and those obtained by subjecting them to a hydrophilic treatment, but the present invention is not particularly limited thereto.

The structure of the nonaqueous electrolyte secondary battery of the present embodiment is not particularly limited, but is generally composed of a positive electrode and a negative electrode, and a separator provided as necessary, and various shapes such as a paper shape, a cylindrical shape, a button shape, and a laminate shape can be used according to the purpose of use.

The nonaqueous secondary electrolyte secondary battery of the above embodiment can be suitably used in various application fields. For example, it can be suitably used as a nonaqueous secondary electrolyte secondary battery to be mounted in a vehicle.

Examples

The present invention will be described below in more detail with reference to examples. The present invention is not limited to the following examples as long as other examples do not depart from the gist thereof. In examples, "carbon nanotube" may be abbreviated as "CNT." Here, unless otherwise specified, "parts" represents "parts by mass" and "%" represents "mass%."

<Method of measuring physical properties>

Physical properties of CNTs used in examples and comparative examples to be described below were measured by the following methods.

<pH of CNT aqueous dispersion liquid>

2 g of CNTs was weighed out in a 450 mL SM sample bottle (commercially available from Sansyo Co., Ltd.), 200 mL of deionized water was added thereto, and the mixture was dispersed using an ultrasonic homogenizer (Advanced Digital Sonifer (registered trademark), MODEL 450DA, commercially available from BRANSON) at an amplitude of 50% for 1 minute under ice cooling. Then, the sample was passed through a nylon mesh with an opening of 48 $\mu$m to collect a filtrate. In addition, the filtrate was then left in a thermostatic chamber at 25°C for 1 hour or longer, and measurement was then performed using a pH meter (pH METER F-52, commercially available from Horiba Ltd.). This result was used as the pH of the CNT aqueous dispersion liquid.

<BET specific surface area of CNTs>

0.03 g of CNTs was weighed out using an electronic balance (MSA225S100DI, commercially available from Sartorius), and then dried at 110°C for 15 minutes while degassing. Then, the BET specific surface area of CNTs was measured using a fully automatic specific surface area measuring device (HM-model 1208, commercially available from MOUNTECH).

<Average fiber length of CNTs>

0.2 g of CNTs was weighed out in a 450 mL SM sample bottle (commercially available from Sansyo Co., Ltd.) using an electronic balance (MSA225S100DI, commercially available from Sartorius), 200 mL of toluene was added thereto, and the mixture was dispersed using an ultrasonic homogenizer (Advanced Digital Sonifer (registered trademark), MODEL 450DA, commercially available from BRANSON) at an amplitude of 50% for 1 minute to produce a CNT dispersion liquid.

Then, several $\mu$L of a CNT dispersion liquid was added dropwise onto a mica substrate, and then dried in an electric oven at 120°C to produce a substrate for observing the powder CNT fiber length. Then, the surface of the substrate produced for observing the powder CNT fiber length was sputtered with platinum. In addition, observation was then performed using an SEM. Observation was performed at a magnification of 5,000 or 20,000 according to the fiber length of CNTs, a plurality of images including 10 or more CNTs within the field of view were captured, the fiber lengths of 100 randomly extracted CNTs were measured, and the average value thereof was used as the average fiber length ($\mu$m) of the CNTs.

<G/D ratio of CNTs>

CNTs were placed on a Raman microscope (XploRA, commercially available from Horiba Ltd.), and measurement was performed using a laser wavelength of 532 nm. The measurement conditions were a fetching time of 60 seconds, a number of times of integrations of 2, a neutral density filter of 10%, an objective lens magnification of 20, a confocal hole of 500, a slit width of 100 $\mu$m, and a measurement wavelength of 100 to 3,000 cm$^{-1}$. CNTs for measurement were dispensed on a slide glass, and flattened using a spatula. Among the obtained peaks, in the spectrum, the maximum peak intensity within a range of 1,560 to 1,600 cm$^{-1}$ was G, the maximum peak intensity within a range of 1,310 to 1,350 cm$^{-1}$ was D, and the ratio of G/D was used as the G/D ratio of CNTs.

<Average outer diameter of CNTs>

0.2 g of CNTs was weighed out in a 450 mL SM sample bottle (commercially available from Sansyo Co., Ltd.) using an electronic balance (MSA225S100DI, commercially available from Sartorius), 200 mL of toluene was added thereto, and the mixture was dispersed using an ultrasonic homogenizer (Advanced Digital Sonifer (registered trademark), MODEL 450DA, commercially available from BRANSON) at an amplitude of 50% for 5 minutes under ice cooling to prepare a CNT dispersion liquid. Then, the CNT dispersion liquid was appropriately diluted, several $\mu$L thereof was added dropwise into a form of a collodion film and dried at room temperature, and observation was then performed using a direct transmission electron microscope (H-7650, commercially available from Hitachi, Ltd.). Observation was performed at a magnification of 50,000, a plurality of images including 10 or more CNTs within the field of view were captured, the outer diameters of 300 randomly extracted CNTs were measured, and the average value thereof was used as the average outer diameter (nm) of the CNTs.

<Volume resistivity of CNT>

Using a powder resistivity measuring device (commercially available from Mitsubishi Chemical Analytech Co., Ltd.: Loresta GP powder resistivity measurement system MCP-PD-51), 1.2 g of a sample mass was used, and according to a powder probe unit (four-point probe/ring electrode, electrode interval of 5.0 mm, electrode radius of 1.0 mm, sample radius of 12.5 mm), an applied voltage limiter was set to 90 V, and the volume resistivity [$\Omega \cdot$cm] of the conductive powder was measured under various pressures. The value of the volume resistivity of CNTs at a density of 1 g/cm$^3$ was evaluated.

<Carbon purity of CNT>

CNTs were decomposed with an acid using a microwave sample pretreatment device (ETHOS1, commercially available from Milestone General K.K.), and metals contained in the CNTs were extracted. Then, analysis was performed using a multi-type ICP optical emission spectrometer (720-ES, commercially available from Agilent), and the amount of metals contained in the extraction liquid was calculated. The carbon purity of the CNTs was calculated as follows.

(Formula 4)

$$\text{Carbon purity(\%)} = ((\text{CNT mass} - \text{mass of metal in CNT}) \div \text{CNT mass}) \times 100\%$$

<Initial viscosity of CNT dispersion liquid>

The CNT dispersion liquid was left in a thermostatic chamber at 25°C for 1 hour or longer, the CNT dispersion liquid was then sufficiently stirred and the measurement was then immediately performed using a B type viscometer rotor at a rotation speed of 60 rpm. Regarding the rotor used for measurement, No. 1 was used when the viscosity value was less than 100 m Pa·s, No. 2 was used when the viscosity value was 100 or more and less than 500 m Pa·s, No. 3 was used when the viscosity value was 500 or more and less than 2,000 m Pa·s, and No.4 was used when the viscosity value was 2,000 or more and less than 10,000 m Pa·s. Evaluation criteria for the initial viscosity are as follows.

(Evaluation criteria)

4 (very good): less than 500 m Pa·s
3 (good): 500 or more and less than 2,000 m Pa·s
2 (acceptable): 2000 or more and 5,000 m Pa·s or less
1 (poor): more than 5,000 m Pa·s

<Stability of CNT dispersion liquid>

The CNT dispersion liquid was left in a thermostatic chamber at 25°C for 1 week, the CNT dispersion liquid was then sufficiently stirred, and the measurement was then immediately performed using a B type viscometer rotor at a rotation speed of 60 rpm. Evaluation criteria for the stability are as follows.

(Evaluation criteria)

4 (very good): equivalent to the initial viscosity.
3 (good): the viscosity changed slightly.
2 (acceptable): the viscosity increased, but gelation did not occur.
1 (poor): gelled.

<Thixotropy ($\alpha/\beta$) of CNT dispersion liquid>

The CNT dispersion liquid was left in a thermostatic chamber at 25°C for 24 hours, the CNT dispersion liquid was then sufficiently stirred, and the measurement was then immediately performed using a B type viscometer rotor at a rotation speed of 6 rpm. Then, the measurement was immediately performed using a B type viscometer rotor at a rotation speed of 60 rpm. In this case, the viscosity measured at 6 rpm was $\alpha$, the viscosity measured at 60 rpm was $\beta$, and the value of $\alpha/\beta$ was evaluated according to the following criteria.

(Evaluation criteria)

4 (very good): 2 or more and less than 4
3 (good): 4 or more and less than 5
2 (acceptable): 5 or more and 6 or less
1 (poor): less than 2 or more than 6

<Complex modulus of elasticity and phase angle of CNT dispersion liquid>

The complex modulus of elasticity and phase angle of the CNT dispersion liquid were evaluated by using a rheometer (RheoStress1 rotational rheometer, commercially available from Thermo Fisher Scientific) with a cone of a diameter of 35 mm and 2°, and measuring the dynamic viscoelasticity at 25°C and a frequency of 1 Hz in a range of a strain rate of 0.01% to 5%.
Evaluation criteria for the complex modulus of elasticity are as follows.

(Evaluation criteria)

3 (very good): 5 Pa or more and less than 50 Pa
2 (good): 1 Pa or more and less than 5 Pa, or 50 Pa or more and less than 100 Pa
1 (poor): less than 1 Pa or more than 100 Pa

In addition, the product (X×Y) of the obtained complex modulus of elasticity X (Pa) and phase angle Y(°) was calculated. The product (X×Y) of the complex modulus of elasticity X (Pa) and the phase angle Y(°) was evaluated according to the following evaluation criteria.

(Evaluation criteria)

2 (good): 100 or more and 1,500 or less
1 (poor): less than 100 or more than 1,500

<50% particle size (D50) of CNT dispersion liquid>

The 50% particle size was measured using a particle size distribution measuring device (Partica LA-960V2, commercially available from HORIBA). The circulation/ultrasound operation conditions were as follows: circulation speed: 3, ultrasound intensity: 7, ultrasound time: 1 minute, stirring speed: 1, and stirring mode: continuous. In addition, during air venting, an ultrasound operation was performed at an ultrasound intensity of 7 and an ultrasound time of 5 seconds. The refractive index of water was 1.333, and the refractive index of the carbon material was 1.92. The measurement was performed after a measurement sample was diluted so that the transmittance of a red laser diode was 60 to 80%, and the particle size was based on volume. The 50% particle size was evaluated according to the following evaluation criteria.

(Evaluation criteria)

3 (very good): 3 $\mu$m or more and 15 $\mu$m or less
2 (good): 1 $\mu$m or more and less than 3 $\mu$m, or more than 15 $\mu$m and 20 $\mu$m or less
1 (poor): less than 1 $\mu$m or more than 20 $\mu$m

<Measurement of pH of CNT dispersion liquid>

The CNT dispersion liquid was left in a thermostatic chamber at 25°C for 1 hour or longer, the CNT dispersion liquid was then sufficiently stirred, and the measurement was then performed using a pH meter (pH METER F-52, commercially available from Horiba Ltd.).

<Volume resistivity of electrode film >

A mixture slurry was applied onto a copper foil using an applicator so that the basis weight per unit of the electrode was 8 mg/cm$^2$, and a coating film was then dried in an electric oven at 120°C±5°C for 25 minutes. Then, the surface resistivity (Q/sq) of the dried coating film was measured using Loresta GP, MCP-T610 (commercially available from Mitsubishi Chemical Analytech Co., Ltd.). After the measurement, the volume resistivity ($\Omega$·cm) of an electrode film for a negative electrode was obtained by multiplying the thickness of the electrode mixture layer formed on the copper foil. The thickness of the electrode mixture layer was obtained by subtracting the film thickness of the copper foil from the average value measured at 3 points in the electrode film using a film thickness meter (DIGIMICRO MH-15M, commercially available from NIKON) to obtain a volume resistivity ($\Omega \cdot cm$) of the electrode film.

<Peeling strength of electrode film>

A mixture slurry was applied onto a copper foil using an applicator so that the basis weight per unit of the electrode was 8 mg/cm$^2$, and the coating film was then dried in an electric oven at 120°C±5°C for 25 minutes. Then, the film was cut into two 90 mm×20 mm rectangles with the coating direction as the major axis. The peeling strength was measured using a desktop tensile tester (Strograph E3, commercially available from Toyo Seiki Co., Ltd.) and evaluated according to the 180 degree peeling test method. Specifically, a double-sided tape with a size of 100 mm×30 mm (No. 5,000NS, commercially available from Nitoms Inc.) was attached to a stainless steel plate, the produced battery electrode mixture layer was brought into close contact with the other surface of the double-sided tape, peeling off was performed while pulling from the bottom to the top at a certain speed (50 mm/min), and the average value of stress at this time was used as the peeling strength.

<Production of standard positive electrode>

Standard positive electrodes used in examples and comparative examples to be described below were produced by the following method.
First, 93 parts by mass of the positive electrode active material (HED (registered trademark) NCM-111 1100, commercially available from BASF TODA Battery Materials LLC), 4 parts by mass of acetylene black (Denka Black (registered trademark) HS100, commercially available from Denka Co., Ltd), and 3 parts by mass of PVDF (Kureha KF polymer W#1300, commercially available from Kureha Battery Materials Japan Co., Ltd.) were put into a plastic container having a volume of 150 cm$^3$ and then mixed with a spatula until powder was uniform. Then, 20.5 parts by mass of NMP was added thereto, and the mixture was stirred at 2,000 rpm for 30 seconds using a rotation/revolution mixer (Awatori Rentaro, ARE-310, commercially available from Thinky Corporation). Then, the mixture in the plastic container was mixed with a spatula until it was uniform, and stirred at 2,000 rpm for 30 seconds using the rotation/revolution mixer. In addition, 14.6 parts by mass of NMP was then added thereto, and the mixture was stirred at 2,000 rpm for 30 seconds using the rotation/revolution mixer. Finally, the sample was stirred at 3,000 rpm for 10 minutes using a high-speed stirrer to obtain a positive electrode mixture slurry. Then, the positive electrode mixture slurry was applied onto an aluminum foil having a thickness of 20 μm as a current collector using an applicator, and then dried in an electric oven at 120°C±5°C for 25 minutes, and the basis weight per unit area of the electrode was adjusted to 20 mg/cm$^2$. In addition, the sample was rolled by a roll press (3t hydraulic roll press, commercially available from Thank Metal Co., Ltd.) to produce a standard positive electrode having a mixture layer density of 3.1 g/cm$^3$.

<Production of standard negative electrode>

0.5 parts by mass of acetylene black (Denka Black (registered trademark) HS-100, commercially available from Denka Co., Ltd.), 1 part by mass of MAC500LC (carboxymethyl cellulose sodium salt, Sunrose special type, MAC500L, commercially available from Nippon Paper Industries Co., Ltd., a non-volatile content of 100%) and 98.4 parts by mass of water were put into a plastic container having a volume of 150 ml and then stirred using a rotation/revolution mixer (Awatori Rentaro, ARE-310, commercially available from Thinky Corporation) at 2,000 rpm for 30 seconds. In addition, 87 parts by mass of artificial graphite (CGB-20, commercially available from Nippon Graphite Industries, Co., Ltd.) as an active material, and 10 parts by mass of silicon were added and the mixture was stirred using a high-speed stirrer at 3,000 rpm for 10 minutes. Subsequently, 3.1 parts by mass of SBR (TRD2001, commercially available from JSR) was added thereto, and the mixture was stirred at 2,000 rpm for 30 seconds using the rotation/revolution mixer to obtain a negative electrode mixture slurry. Then, the negative electrode mixture slurry was applied onto a copper foil using an applicator so that the basis weight per unit of the electrode was 8 mg/cm$^2$ and the coating film was then dried in an electric oven at 120°C±5°C for 25 minutes. In addition, the sample was rolled by a roll press (3t hydraulic roll press, commercially available from Thank Metal Co., Ltd.) to produce a standard negative electrode having a mixture layer density of 1.7 g/cm$^3$.

<Evaluation of rate property of lithium ion secondary battery>

A laminate type lithium ion secondary battery was placed in a thermostatic chamber at 25°C, and charging and discharging measurement was performed using a charging and discharging device (SM-8, commercially available from Hokuto Denko Corporation). Constant current and constant voltage charging (a cutoff current of 1.1 mA (0.02C)) was performed at a charging current of 11 mA (0.2C) and a charge final voltage of 4.2 V, and constant current discharging was then performed at a discharging current of 11 mA (0.2C) and a discharge final voltage of 2.5 V. This operation was repeated three times and constant current and constant voltage charging (cutoff current (1.1 mA (0.02C))) was then performed at a charging current of 11 mA (0.2C) and a charge final voltage of 4.2 V, constant current discharging was performed at a discharging current 0.2C and 3C until the discharge final voltage reached 2.5 V, and each discharging capacity was determined. The rate property can be expressed as a ratio between the 0.2C discharging capacity and the 3C discharging capacity according to the following (Formula 5).

(Formula 5)

Rate property=3C discharging capacity/3$^{rd}$ 0.2C discharging capacity$\times$100(%)

<Evaluation of cycle property of lithium ion secondary battery>

The laminate type lithium ion secondary battery was placed in a thermostatic chamber at 25°C, and charging and discharging measurement was performed using a charging and discharging device (SM-8, commercially available from Hokuto Denko Corporation). Constant current and constant voltage charging (a cutoff current of 1.38 mA (0.025C)) was performed at a charging current of 55 mA (1C) and a charge final voltage of 4.2 V and constant current discharging was then performed at a discharging current of 55 mA (1C) and a discharge final voltage of 2.5 V. This operation was repeated 200 times. 1C was the current value at which the theoretical capacity of the positive electrode was discharged in 1 hour. The cycle property can be expressed as a ratio between the 3$^{rd}$ 1C discharging capacity and the 200$^{th}$ 1C discharging capacity at 25°C according to the following (Formula 6).

(Formula 6)

Cycle property=3$^{rd}$ 1C discharging capacity/200$^{th}$ 1C discharging capacity$\times$100(%)

<Synthesis of copolymer of acrylonitrile and acrylic acid>

100 parts of acetonitrile was put into a reaction container including a gas inlet pipe, a thermometer, a condenser, and a stirrer, and the inside was purged with nitrogen gas. The inside of the reaction container was heated to 75°C, and a mixture containing 90.0 parts of acrylonitrile, 10.0 parts of acrylic acid and 5.0 parts of 2,2'-azobis(2,4-dimethylvaleronitrile) (V-65, commercially available from NOF Corporation) was added dropwise over 3 hours, and a polymerization reaction was performed. After dropwise addition was completed, the reaction was additionally performed at 75°C for 1 hour, 0.5 parts of perbutyl O was then added, and the reaction was additionally continued at 75°C for 1 hour. Then, the non-volatile content was measured, and it was confirmed that the conversion ratio exceeded 98%, and the dispersion medium was completely removed by concentration under a reduced pressure to obtain a copolymer of acrylonitrile and acrylic acid. The weight average molecular weight (Mw) of the copolymer of acrylonitrile and acrylic acid was 45.000.

<Dispersant>

·Carboxymethyl cellulose (Sunrose A APP-84, a weight average molecular weight of 17,600, commercially available from Nippon Paper Industries Co., Ltd.), and hereinafter, it will be abbreviated as CMC.
·Carboxymethyl cellulose (Sunrose (registered trademark) F01MC, a weight average molecular weight of 55,600, commercially available from Nippon Paper Industries Co., Ltd.), and hereinafter, it will be abbreviated as CMC2.
·Carboxymethyl cellulose (Sunrose (registered trademark) F05MC, a weight average molecular weight of 104,500, commercially available from Nippon Paper Industries Co., Ltd.), and hereinafter, it will be abbreviated as CMC3.
· Polyvinylpyrrolidone (commercially available from Nippon Shokubai Co., Ltd., K-30, a weight average molecular weight of 40,000), and hereinafter, it will be abbreviated as

PVP.

· Copolymer of acrylonitrile and acrylic acid, and hereinafter, it will be abbreviated as PAN.

<Additives>

·2-Aminoethanol (Wako 1st Grade, commercially available from FUJIFILM Wako Pure Chemical Corporation)
·$Na_2CO_3$ (Wako 1st Grade, commercially available from FUJIFILM Wako Pure Chemical Corporation)
·NaOH (Wako 1st Grade, commercially available from FUJIFILM Wako Pure Chemical Corporation)

<Defoaming agent>

- SURFYNOL 104E (HLB value 4, a surface tension of 33 mN/m, commercially available from Nissin Chemical Co., Ltd.)
- SURFYNOL 440 (HLB value 8, a surface tension of 32 mN/m, commercially available from Nissin Chemical Co., Ltd.)
- SN Defoamer 777 (commercially available from San Nopco Ltd.)

<Synthesis of cobalt hydroxide>

According to the method described in paragraph [0091] in Japanese Patent Laid-Open No. 2012-072050, cobalt hydroxide in which spherical secondary particles were formed from plate-like primary particles was produced. The sulfur residue contained in the produced cobalt hydroxide was determined through ICP analysis, and the result was 1,500 ppm.

<Synthesis of CNT synthesis catalyst>

A CNT synthesis catalyst (X) was produced according to the method described in paragraph [0147] and paragraph [0148] in Japanese Patent Laid-Open No. 2019-108256 except that 30 parts of cobalt hydroxide in which spherical secondary particles were formed from the above plate-like primary particles was used in place of 30 parts of cobalt(II) hydroxide.
A CNT synthesis catalyst (Y) was produced according to the method described in paragraph [0117] in Japanese Patent Laid-Open No. 2018-150218 except that 30 parts of cobalt hydroxide in which spherical secondary particles were formed from the above plate-like primary particles was used in place of 30 parts of cobalt(II) hydroxide.
A CNT synthesis catalyst (Z) was obtained in the same method as the CNT synthesis catalyst (X) except that 60 parts of cobalt acetate tetrahydrate was used in place of 30 parts of cobalt(II) hydroxide.

(Example 1-1)

<Synthesis of CNT (A)>

A quartz glass heat-resistant plate on which 1 g of the CNT synthesis catalyst (X) was dispersed was placed on a center part of a horizontal reaction tube having an internal volume of 10 L, which could be pressurized and heated by an external heater. Discharging was performed while nitrogen gas was injected, the air in the reaction tube was replaced with nitrogen gas, and heating was performed until the atmosphere temperature in the horizontal reaction tube reached 700°C. After the temperature reached 700°C, propane gas as a hydrocarbon was introduced into the reaction tube at a flow rate of 2 L/min and a contact reaction was performed for 60 minutes. After the reaction was completed, the gas in the reaction tube was replaced with nitrogen gas, cooling was performed until the temperature of the reaction tube reached 100°C or lower, and removing was performed to obtain a CNT (A).

(Examples 1-2 to 1-12, and 1-15 to 1-17)

<Synthesis of CNTs (B) to (S)>

CNTs (B) to (S) were produced in the same method as in Example 1 except that the CNT synthesis catalyst, reaction temperature, carbon source, and gas flow rate were changed as listed in Table 1.

[Table 1]

Table 1

|  | CNT | CNT synthesis catalyst | Reaction temperature (°C) | Reaction time (min) | Carbon source |
|---|---|---|---|---|---|
| Example 1-1 | A | X | 700 | 60 | Propane gas |
| Example 1-2 | B | X | 700 | 90 | Propane gas |
| Example 1-3 | C | X | 700 | 120 | Propane gas |
| Example 1-4 | D | Y | 700 | 90 | Propane gas |
| Example 1-5 | E | Y | 700 | 120 | Propane gas |
| Example 1-6 | F | Z | 700 | 120 | Propane gas |
| Example 1-7 | G | X | 680 | 30 | Ethylene gas |
| Example 1-8 | H | X | 680 | 60 | Ethylene gas |
| Example 1-9 | I | X | 680 | 90 | Ethylene gas |
| Example 1-10 | J | Y | 680 | 60 | Ethylene gas |
| Example 1-11 | K | Y | 680 | 90 | Ethylene gas |
| Example 1-12 | L | Z | 680 | 90 | Ethylene gas |
| Example 1-15 | Q | X | 700 | 15 | Ethylene gas |
| Example 1-16 | R | X | 650 | 60 | Propane gas |
| Example 1-17 | S | X | 650 | 90 | Propane gas |

(Example 1-13)

<Synthesis of CNT (GA)>

10 kg of CNT (G) was weighed out in a 120 L heat resistant container, and the heat resistant container containing the CNTs was placed in a furnace. Then, nitrogen gas was introduced into the furnace, and the air in the furnace was discharged while the positive pressure was maintained. After the oxygen concentration in the furnace reached 0.1% or less, heating was performed to 1,600°C over 30 hours. While the temperature in the furnace was maintained at 1,600°C, chlorine gas was introduced at a rate of 50 L/min for 50 hours. Then, cooling was performed while the nitrogen gas was introduced at 50 L/min and the positive pressure was maintained to obtain a CNT (GA).

(Example 1-14)

A CNT (IA) was obtained in the same method as in Example 1-13 except that the CNT (I) was used in place of the CNT (G).

(Comparative Example 1-1)

10 g of CNT (G) was weighed out in a 1 L glass container, 500 g of 20% hydrochloric acid (commercially available from FUJIFILM Wako Pure Chemical Corporation) was added, and the mixture was sufficiently stirred using a stirrer. Then, sufficient dilution was performed using deionized water, and filtration was performed under a reduced pressure using a membrane filter. After dilution and filtration operations were repeated, the CNTs were transferred into a PTFE vat and then dried using an oven at 80°C to obtain a CNT (GB). The pH of the CNT (GB) was 4.0.

(Comparative Examples 1-2 to 1-4)

Multiwalled carbon nanotubes (NC7000, commercially available from Nanocyl) were CNT (M), carbon nanotubes (VGCF-H, commercially available from SHOWA DENKO K.K.) were CNT (N), and multiwalled carbon nanotubes (millimeter-order CNT, commercially available from TPR) were CNT (O). Single-walled carbon nanotubes (TUBALL, commercially available from OCSiAl) were CNT (P).

Table 2 shows the evaluation results of the CNTs of Examples 1-1 to 1-17, Comparative Examples 1-1 to 1-4, and Reference Example 1-1.

[Table 2]

Table 2

| | CNT type | Outer diameter (nm) | BET specific surface area (m²/g) | Volume resistivity (×10⁻² Ω·cm) | Average fiber length (nm) | Carbon purity (%) | G/D ratio | pH of CNT aqueous dispersion liquid |
|---|---|---|---|---|---|---|---|---|
| Example 1-1 | A | 6.5 | 680 | 1.3 | 1100 | 95 | 0.75 | 9.5 |
| Example 1-2 | B | 7.1 | 580 | 1.4 | 1600 | 98 | 0.73 | 8.8 |
| Example 1-3 | C | 8.3 | 500 | 1.4 | 1500 | 99 | 0.78 | 8.7 |
| Example 1-4 | D | 9 | 430 | 1.7 | 1700 | 98 | 0.8 | 8.5 |
| Example 1-5 | E | 10.1 | 330 | 1.8 | 1800 | 98 | 0.85 | 8.5 |
| Example 1-6 | F | 13.5 | 220 | 1.9 | 2300 | 98 | 1.02 | 8.1 |
| Example 1-7 | G | 6.2 | 710 | 1.2 | 2400 | 95 | 0.71 | 9.2 |
| Example 1-8 | H | 6.9 | 600 | 1.3 | 2800 | 98 | 0.72 | 8.8 |
| Example 1-9 | I | 8.1 | 530 | 1.4 | 2600 | 98 | 0.8 | 8.8 |
| Example 1-10 | J | 9 | 440 | 1.7 | 3000 | 97 | 0.82 | 8.4 |
| Example 1-11 | K | 10.3 | 360 | 1.8 | 4000 | 98 | 0.85 | 8.6 |
| Example 1-12 | L | 12.5 | 250 | 1.8 | 3800 | 98 | 1.01 | 8.1 |
| Example 1-13 | GA | 6.3 | 680 | 1.3 | 1800 | 99.9 | 1.5 | 8.2 |
| Example 1-14 | IA | 8.1 | 510 | 1.5 | 2000 | 99.9 | 1.8 | 8.1 |
| Example 1-15 | Q | 5.8 | 720 | 1.5 | 3100 | 93 | 0.68 | 9.6 |
| Example 1-16 | R | 6.8 | 620 | 1.8 | 700 | 94 | 0.7 | 9.5 |
| Example 1-17 | S | 7 | 550 | 1.8 | 900 | 95 | 0.71 | 9.5 |
| Comparative Example 1-1 | GB | 6.2 | 700 | 1.2 | 2300 | 99.5 | 0.75 | 5.8 |
| Comparative Example 1-2 | M | 10 | 210 | 1.7 | 1100 | 90 | 0.91 | 8.1 |
| Comparative Example 1-3 | N | 150 | 10 | 1.5 | 5000 | 99.9 | 7.23 | 7.9 |
| Comparative Example 1-4 | O | 5 to 12 | 230 | 1.2 | 7500 | 99.9 | 0.85 | 7.9 |

(continued)

| | CNT type | Outer diameter (nm) | BET specific surface area (m²/g) | Volume resistivity (×10⁻² Ω·cm) | Average fiber length (nm) | Carbon purity (%) | G/D ratio | pH of CNT aqueous dispersion liquid |
|---|---|---|---|---|---|---|---|---|
| Reference Example 1-1 | P | 1.2 to 2.0 | 980 | 0.24 | 4500 | 99 | 39.1 | 7.9 |

In all of the CNTs of Examples 1-1 to 1-17, the pH of the aqueous dispersion liquid was in a range of 8.0 to 10.0, and the BET specific surface area was in a range of 200 to 800 m²/g. In addition, the average fiber length (Y) and the BET specific surface area (X) of the CNTs satisfied the following relational expression.

$$Y=-aX+b$$

(a and b are constants, $2.2 \leq a \leq 3.5$, $2,300 \leq b \leq 5,000$)

More specifically, for example, for the CNT (E) of Example 1-5, the average fiber length (Y) was 1,800 nm, the BET specific surface area (X) was 330 m²/g, and when a was 2.7, b=aX+Y=2.7×330+1,800=2,691. In addition, for the CNT (K) of Example 1-11, the average fiber length (Y) was 4,000 nm, the BET specific surface area (X) was 360 m²/g, and when a was 2.7, b=aX+Y=2.7×360+4,000=4,972.

Fig. 1 is a graph showing the relationship between the BET specific surface area and the CNT average fiber length of the carbon nanotubes (CNT) produced in examples of the present invention and the carbon nanotubes (CNT) used in the comparative examples and the reference example. As can be understood from Fig. 1, in the CNT (A) to CNT (F) of Examples 1-1 to 1-6, X and Y were correlated according to the following relational expression (regression line).

$$Y=-2.2X+2,678.7$$

In the CNT (G) to CNT (L) of Examples 1-7 to 1-12, X and Y were correlated according to the following relational expression (regression line).

$$Y=-3.5X+4,791.4$$

In the CNT (GA) and CNT (IA) of Examples 1-13 and 1-14, X and Y were correlated according to the following relational expression (regression line).

$$Y=-1.2X+2,600.0$$

On the other hand, in all of the CNT (GB) of Comparative Example 1-1, the CNT (N) of Comparative Example 1-3, the CNT (O) of Comparative Example 4 and the CNT (P) of Reference Example 1-1, the pH of the aqueous dispersion liquid was outside a range of 8.0 to 10.0. In addition, in the CNT (N) of Comparative Example 1-3 and the CNT (P) of Reference Example 1-1, the BET specific surface area was outside a range of 200 to 800 m²/g. In addition, in the CNT (M) of Comparative Example 1-2 and the CNT (O) of Comparative Example 1-4, with respect to values of the average fiber length (Y) and the BET specific surface area (X) of the CNT, constants a and b at which both sides of the following expression Y=-aX+b were equal to each other were not present in ranges of $2.2 \leq a \leq 3.5$ and $2,300 \leq b \leq 5,000$.

For example, for the "CNT (M)" of Comparative Example 1-2, the average fiber length was 1,100 nm and the BET specific surface area X was 210, and when $2.2 \leq a \leq 3.5$, the range of $2,300 \leq b \leq 5,000$ was not satisfied. This is clearly understood from Fig. 1.

(Example 2-1)

According to the compositions shown in Table 3, deionized water, a dispersant, an additive, and a defoaming agent were put into a stainless steel container, and the mixture was stirred using a disper until it was uniform. Then, the CNT (A) was added while stirring was performed using a disper, a square hole high shear screen was installed in a high shear mixer (L5M-A, commercially available from SILVERSON), and batch type dispersion was performed at a rate of 8,600 rpm until the entire sample was made uniform and the dispersion particle size became 250 $\mu$m or less with a grind gauge. Subsequently, a liquid to be dispersed was supplied from the stainless steel container to a high pressure homogenizer (Star Burst Labo HJP-17007, commercially available from Sugino Machine Ltd.) through a pipe, and a 20-pass type dispersion treatment was performed. The dispersion treatment was performed using a single nozzle chamber with a nozzle diameter of 0.25 mm and a pressure of 80 MPa.

(Example 2-2 to Comparative Example 2-4)

CNT dispersion liquids (B) to (N) were produced according to the compositions shown in Table 3 except that the CNTs (B) to (O) were used in place of the CNT (A). The CNT dispersion liquid (O) had a high viscosity and could not be dispersed using a high pressure homogenizer.

(Example 2-31 to Example 2-32)

According to the compositions shown in Table 3, NMP, a dispersant, and an additive were put into a stainless steel container and the mixture was stirred using a disper until it was uniform. Then, the CNT (C) was added while stirring was performed using a disper, a square hole high shear screen was installed in a high shear mixer (L5M-A, commercially available from SILVERSON), and batch type dispersion was performed at a rate of 8,600 rpm until the entire sample was made uniform and the dispersion particle size became 250 $\mu$m or less with a grind gauge. Subsequently, a liquid to be dispersed was supplied from the stainless steel container to a high pressure homogenizer (Star Burst Labo HJP-17007, commercially available from Sugino Machine Ltd.) through a pipe, and a 20-pass type dispersion treatment was performed. The dispersion treatment was performed using a single nozzle chamber with a nozzle diameter of 0.25 mm and a pressure of 80 MPa.

[Table 3-1]

Table 3

| | CNT dispersion liquid | CNT | | Dispersant | | Additive | | Defoaming agent | | Water | | | | |
|---|---|---|---|---|---|---|---|---|---|---|---|---|---|---|
| | | Type | Amount added (parts) | Type | Amount added (parts) | Type | Amount added (parts) | Type | Amount added (parts) | Amount added (parts) | Amount of dispersant (vs. CNT) | Amount of additive (vs. CNT) | |
| Example 2-1 | A | A | 1 | CMC | 0.5 | - | - | - | - | 98.5 | 50% | 0% | 1 |
| Example 2-2 | B | B | 1 | CMC | 0.5 | - | - | - | - | 98.5 | 50% | 0% | |
| Example 2-3 | C | C | 1 | CMC | 0.5 | - | - | - | - | 98.5 | 50% | 0% | |
| Example 2-4 | D | D | 1 | CMC | 0.5 | - | - | - | - | 98.5 | 50% | 0% | |
| Example 2-5 | E | E | 1 | CMC | 0.5 | - | - | - | - | 98.5 | 50% | 0% | |
| Example 2-6 | F | F | 1 | CMC | 0.5 | - | - | - | - | 98.5 | 50% | 0% | |
| Example 2-7 | G1 | G | 1 | CMC | 0.2 | - | - | - | - | 98.8 | 20% | 0% | |
| Example 2-8 | G2 | G | 1 | CMC | 0.5 | - | - | - | - | 98.5 | 50% | 0% | 1 |
| Example 2-9 | G3 | G | 1 | CMC | 1 | - | - | - | - | 98 | 100% | 0% | 1 |
| Example 2-10 | G4 | G | 1 | PVP | 0.5 | - | - | - | - | 98.5 | 50% | 0% | |
| Example 2-11 | G5 | G | 1 | PVP | 0.5 | 2-aminoethanol | 0.1 | - | - | 98.5 | 50% | 10% | |
| Example 2-12 | G6 | G | 1 | PAN | 0.5 | - | - | - | - | 98.5 | 50% | 0% | |
| Example 2-13 | G7 | G | 1 | PAN | 0.5 | NaOH | 0.1 | - | - | 98.5 | 50% | 10% | |
| Example 2-14 | G8 | G | 1 | PAN | 0.5 | NaOH | 0.05 | - | - | 98.5 | 50% | 5% | 1 |
| Example 2-15 | G9 | G | 1 | PAN | 0.5 | NaOH | 0.05 | SURFYNOL 104E | 0.1 | 98.5 | 50% | 5% | 1 |

| | | | | | | | | | | | | |
|---|---|---|---|---|---|---|---|---|---|---|---|---|
| Example 2-16 | G10 | G | 1 | PAN | 0.5 | Na$_2$CO$_3$ | 0.1 | SURFYNOL 104E | 0.1 | 98.5 | 50% | 10% |
| Example 2-17 | G11 | G | 1 | PAN | 0.5 | Na$_2$CO$_3$ | 0.1 | SURFYNOL 104E | 0.1 | 98.5 | 50% | 10% |
| Example 2-18 | G12 | G | 1 | PAN | 0.5 | Na$_2$CO$_3$ | 0.1 | SN Defoamer 777 | 0.1 | 98.5 | 50% | 10% |
| Example 2-19 | G13 | G | 0.5 | CMC | 0.25 | - | - | - | - | 99.25 | 50% | 0% |
| Example 2-20 | G14 | G | 2 | CMC | 1 | - | - | - | - | 97 | 50% | 0% |
| Example 2-21 | G15 | G | 2.5 | CMC | 1.25 | - | - | - | - | 96.25 | 50% | 0% | 1 |

[Table 3-2]

(following) Table 3

| | CNT dispersion liquid | CNT | | Dispersant | | Additive | | Defoaming agent | | Water | | | | |
|---|---|---|---|---|---|---|---|---|---|---|---|---|---|---|
| | | Type | Amount added (parts) | Type | Amount added (parts) | Type | Amount added (parts) | Type | Amount added (parts) | Amount added (parts) | Amount of dispersant (vs. CNT) | Amount of additive (vs. CNT) | pH | Initial viscosi |
| Example 2-22 | H | H | 1 | CMC | 0.5 | - | - | - | - | 98.5 | 50% | 0% | 10 | 2 |
| Example 2-23 | I | I | 1 | CMC | 0.5 | - | - | - | - | 98.5 | 50% | 0% | 10 | 2 |
| Example 2-24 | J | J | 1 | CMC | 0.5 | - | - | - | - | 98.5 | 50% | 0% | 10 | 3 |
| Example 2-25 | K | K | 1 | CMC | 0.5 | - | - | - | - | 98.5 | 50% | 0% | 10 | 4 |
| Example 2-26 | L | L | 1 | CMC | 0.5 | - | - | - | - | 98.5 | 50% | 0% | 10 | 4 |
| Example 2-27 | GA | GA | 1 | CMC | 0.5 | - | - | - | - | 98.5 | 50% | 0% | 8.5 | 4 |
| Example 2-28 | IA | IA | 1 | CMC | 0.5 | - | - | - | - | 98.5 | 50% | 0% | 8.5 | 4 |

| | | | | | | | | | | | | | | |
|---|---|---|---|---|---|---|---|---|---|---|---|---|---|---|
| Example 2-29 | C2 | C | 1 | CMC2 | 0.5 | - | - | - | - | 98.5 | 50% | 0% | 10 | 3 |
| Example 2-30 | C3 | C | 1 | CMC3 | 0.5 | - | - | - | - | 98.5 | 50% | 0% | 10 | 2 |
| Example 2-33 | Q | Q | 1 | CMC | 0.5 | - | - | - | - | 98.5 | 50% | 0% | 10 | 2 |
| Example 2-34 | R | R | 1 | CMC | 0.5 | - | - | - | - | 98.5 | 50% | 0% | 10.5 | 3 |
| Example 2-35 | S | S | 1 | CMC | 0.5 | - | - | - | - | 98.5 | 50% | 0% | 10.5 | 3 |
| Comparative Example 2-1 | GB | GB | 1 | CMC | 0.5 | - | - | - | - | 98.5 | 50% | 0% | 6.5 | 4 |
| Comparative Example 2-2 | M | M | 1 | CMC | 0.5 | - | - | - | - | 98.5 | 50% | 0% | 10 | 3 |
| Comparative Example 2-3 | N | N | 1 | CMC | 0.5 | - | - | - | - | 98.5 | 50% | 0% | 9.5 | 4 |
| Comparative Example 2-4 | O | O | 1 | CMC | 0.5 | - | - | - | - | 98.5 | 50% | 0% | 9.5 | 1 |

| | CNT dispersion liquid | CNT | | Dispersant | | Additive | | Defoaming agent | | NMP | | | | |
|---|---|---|---|---|---|---|---|---|---|---|---|---|---|---|
| | | Type | Amount added (parts) | Type | Amount added (parts) | Type | Amount added (parts) | Type | Amount added (parts) | Amount added (parts) | Amount of dispersant (vs. CNT) | Amount of additive (vs. CNT) | pH | In visc |
| Example 2-31 | C4 | C | 1 | PVP | 0.5 | - | - | - | - | 98.5 | 50% | 0% | - | |
| Example 2-32 | C5 | C | 1 | PVP | 0.5 | 2-aminoethanol | 0.1 | - | - | 98.5 | 50% | 10% | - | |

<Production of carbon nanotube resin composition and mixture slurry>

(Example 3-1)

A CNT dispersion liquid (CNT dispersion liquid A), an aqueous solution in which 2 weight% of CMC (#1190, commercially available from Daicel FineChem Co., Ltd.) was dissolved, and water were put into a plastic container having a volume of 150 cm$^3$, and the mixture was then stirred at 2,000 rpm for 30 seconds using a rotation/revolution mixer (Awatori Rentaro, ARE-310, commercially available from Thinky Corporation) to obtain a carbon nanotube resin composition (A). Then, silicon monoxide (SILICON MONOOXIDE SiO 1.3C 5 $\mu$m, commercially available from Osaka Titanium Technologies Co., Ltd.) was added to the carbon nanotube resin composition, and the mixture was stirred at 2,000 rpm for 5 minutes using the rotation/revolution mixer, and then mixed well with a spatula. In addition, then, graphite (CGB-20, commercially available from Nippon Graphite Industries, Co., Ltd.) was added thereto, and the mixture was stirred at 2,000 rpm for 5 minutes using the rotation/revolution mixer and then mixed well with a spatula. Finally, SBR (styrene butadiene rubber TRD2001, commercially available from JSR) was added thereto and the mixture was stirred at 2,000 rpm for 30 seconds using the rotation/revolution mixer to obtain a mixture slurry (A). The non-volatile content of the negative electrode mixture composition was 48 mass%. Among the non-volatile contents of the negative electrode mixture composition, the non-volatile content ratio of graphite: silicon monoxide:CNT:CMC(#1190):SBR was 87:10:0.5:1:1.5.

(Example 3-2 to Comparative Example 3-3)

Carbon nanotube resin compositions (B) to (N) and mixture slurries (B) to (N) were obtained in the same method as in Example 3-1 except that the CNT dispersion liquids shown in Table 4 were used.

(Example 3-31)

7.0 parts by mass of NMP in which 8 mass% of PVDF (polyvinylidene fluoride, commercially available from Solvay, Solef#5130) was dissolved was weighed out in a plastic container having a volume of 150 cm$^3$. Then, 18.7 parts by mass of the CNT dispersion liquid (C4) was added thereto, and the mixture was stirred at 2,000 rpm for 30 seconds using the rotation/revolution mixer (Awatori Rentaro, ARE-310) to obtain a CNT resin composition (C4).
In addition, then, 36.9 parts of a positive electrode active material (HED (registered trademark) NCM-111 1100, commercially available from BASF TODA Battery Materials LLC) was added thereto, and the mixture was stirred at 2,000 rpm for 2.5 minutes using the rotation/revolution mixer (Awatori Rentaro, ARE-310) to obtain a positive electrode mixture slurry (C4).

(Example 3-32)

A CNT resin composition (C5) and a positive electrode mixture slurry (C5) were obtained in the same method as in Example 3-31 except that the CNT dispersion liquid (C5) was used.

[Table 4]

Table 4

| | CNT resin composition | Mixture slurry | CNT dispersion liquids |
|---|---|---|---|
| Example 3-1 | A | A | A |
| Example 3-2 | B | B | B |
| Example 3-3 | C | C | C |
| Example 3-4 | D | D | D |
| Example 3-5 | E | E | E |
| Example 3-6 | F | F | F |
| Example 3-7 | G1 | G1 | G1 |
| Example 3-8 | G2 | G2 | G2 |
| Example 3-9 | G3 | G3 | G3 |
| Example 3-10 | G4 | G4 | G4 |
| Example 3-11 | G5 | G5 | G5 |
| Example 3-12 | G6 | G6 | G6 |
| Example 3-13 | G7 | G7 | G7 |
| Example 3-14 | G8 | G8 | G8 |
| Example 3-15 | G9 | G9 | G9 |
| Example 3-16 | G10 | G10 | G10 |
| Example 3-17 | G11 | G11 | G11 |
| Example 3-18 | G12 | G12 | G12 |
| Example 3-19 | G13 | G13 | G13 |
| Example 3-20 | G14 | G14 | G14 |
| Example 3-21 | G15 | G15 | G15 |
| Example 3-22 | H | H | H |
| Example 3-23 | I | I | I |
| Example 3-24 | J | J | J |
| Example 3-25 | K | K | K |
| Example 3-26 | L | L | L |
| Example 3-27 | GA | GA | GA |
| Example 3-28 | IA | IA | IA |
| Example 3-29 | C2 | C2 | C2 |
| Example 3-30 | C3 | C3 | C3 |
| Comparative Example 3-1 | GB | GB | GB |
| Comparative Example 3-2 | M | M | M |
| Comparative Example 3-3 | N | N | N |
| Example 3-31 | C4 | C4 | C4 |
| Example 3-32 | C5 | C5 | C5 |
| Example 3-33 | Q | Q | Q |
| Example 3-34 | R | R | R |
| Example 3-35 | S | S | S |

(Example 4-1)

The mixture slurry (A) was applied onto a copper foil having a thickness of 20 μm using an applicator and the coating film was then dried in an electric oven at 120°C±5°C for 25 minutes to produce an electrode film for a negative electrode. Then, the electrode film was rolled by a roll press (3t hydraulic roll press, commercially available from Thank Metal Co., Ltd.) to obtain a negative electrode (negative electrode A). Here, the basis weight per unit of the mixture layer was 8 mg/cm$^2$, and the mixture layer density after the rolling was 1.6 g/cc.

(Example 4-2 to Comparative Example 4-3)

Electrode films for a negative electrode (B) to (N) and negative electrodes (B) to (N) were produced using the mixture slurries (B) to (N) in place of the mixture slurry (A).

(Example 4-31)

The mixture slurry (C4) was applied onto an aluminum foil using an applicator so that the basis weight per unit of the electrode was 20 mg/cm$^2$ and the coating film was then dried in an electric oven at 120°C±5°C for 25 minutes to obtain an electrode film for a positive electrode (C4). Then, the electrode film for a positive electrode (C4) was rolled by a roll press (3t hydraulic roll press, commercially available from Thank Metal Co., Ltd.) to obtain a positive electrode (C4). Here, the basis weight per unit of the mixture layer was 20 mg/cm$^2$, and the mixture layer density after the rolling was 3.1 g/cc.

(Example 4-32)

An electrode film for a positive electrode (C5) and a positive electrode (C5) were produced in the same method as in Example 4-31 except that the mixture slurry (C5) was used in place of the mixture slurry (C4).
Table 5 shows the evaluation results of the electrode films for a negative electrode and electrode films for a positive electrode produced in Example 4-1 to Comparative Example 4-3. The criteria for each evaluation of the electrode films are as follows.

(Volume resistivity)

3 (very good): the volume resistivity (Ω·cm) of the electrode film was less than 0.15
2 (good): the volume resistivity (Ω·cm) of the electrode film was 0.15 or more and less than 0.3
1 (poor): the volume resistivity (Ω·cm) of the electrode film was 0.3 or more

(Adhesion)

3 (very good): the peeling strength (N/cm) was 0.5 or more
2 (good): the peeling strength (N/cm) was 0.3 or more and less than 0.5
1 (poor): the peeling strength (N/cm) was less than 0.3

The evaluation criteria for the electrode film for a positive electrode are as follows.

(Volume resistivity)

3 (good): the volume resistivity (Ω·cm) of the electrode film was less than 10
2 (acceptable): the volume resistivity (Ω·cm) of the electrode film was 10 or more and less than 15
1 (poor): the volume resistivity (Ω·cm) of the electrode film was 15 or more

(Adhesion)

3 (good): the peeling strength (N/cm) was 0.3 or more

2 (acceptable): the peeling strength (N/cm) was 0.2 or more and less than 0.3

1 (poor): the peeling strength (N/cm) was less than 0.2

[Table 5]

Table 5

| | Electrode film for negative electrode | Mixture slurry | Evaluation result | |
|---|---|---|---|---|
| | | | Volume resistivity | Peeling strength |
| Example 4-1 | A | A | 4 | 4 |
| Example 4-2 | B | B | 4 | 4 |
| Example 4-3 | C | C | 4 | 4 |
| Example 4-4 | D | D | 4 | 4 |
| Example 4-5 | E | E | 3 | 4 |
| Example 4-6 | F | F | 3 | 3 |
| Example 4-7 | G1 | G1 | 4 | 3 |
| Example 4-8 | G2 | G2 | 4 | 4 |
| Example 4-9 | G3 | G3 | 3 | 3 |
| Example 4-10 | G4 | G4 | 3 | 3 |
| Example 4-11 | G5 | G5 | 3 | 3 |
| Example 4-12 | G6 | G6 | 3 | 4 |
| Example 4-13 | G7 | G7 | 3 | 3 |
| Example 4-14 | G8 | G8 | 3 | 3 |
| Example 4-15 | G9 | G9 | 3 | 3 |
| Example 4-16 | G10 | G10 | 4 | 4 |
| Example 4-17 | G11 | G11 | 4 | 4 |
| Example 4-18 | G12 | G12 | 4 | 4 |
| Example 4-19 | G13 | G13 | 4 | 4 |
| Example 4-20 | G14 | G14 | 4 | 3 |
| Example 4-21 | G15 | G15 | 3 | 3 |
| Example 4-22 | H | H | 4 | 4 |
| Example 4-23 | I | I | 4 | 4 |
| Example 4-24 | J | J | 4 | 4 |
| Example 4-25 | K | K | 4 | 4 |
| Example 4-26 | L | L | 4 | 4 |
| Example 4-27 | GA | GA | 4 | 4 |

(continued)

|  | Electrode film for negative electrode | Mixture slurry | Evaluation result | |
|---|---|---|---|---|
|  |  |  | Volume resistivity | Peeling strength |
| Example 4-28 | IA | IA | 4 | 4 |
| Example 4-29 | C2 | C2 | 4 | 4 |
| Example 4-30 | C3 | C3 | 3 | 4 |
| Example 4-33 | Q | Q | 4 | 4 |
| Example 4-34 | R | R | 3 | 3 |
| Example 4-35 | S | S | 3 | 3 |
| Comparative Example 4-1 | GB | GB | 3 | 1 |
| Comparative Example 4-2 | M | M | 1 | 3 |
| Comparative Example 4-3 | N | N | 1 | 3 |

|  | Electrode film for positive electrode | Mixture slurry | Evaluation result | |
|---|---|---|---|---|
|  |  |  | Volume resistivity | Peeling strength |
| Example 4-31 | C4 | C4 | 4 | 3 |
| Example 4-32 | C5 | C5 | 4 | 3 |

(Example 5-1)

The negative electrode (A) and the standard positive electrode were punched out into 50 mm×45 mm and 45 mm×40 mm, respectively, and a separator (porous polypropylene film) inserted therebetween was inserted into an aluminum laminated bag and dried in an electric oven at 60°C for 1 hour. Then, 2 mL of an electrolytic solution (a nonaqueous electrolytic solution obtained by preparing a mixed solvent obtained by mixing ethylene carbonate, ethyl methyl carbonate and dimethyl carbonate at a ratio of 3:5:2 (volume ratio), additionally adding 1 part by mass of vinylene carbonate (VC) and fluoroethylene carbonate (FEC) as additives with respect to 100 parts by mass of the mixed solvent and then dissolving $LiPF_6$ at a concentration of 1 M) was injected into a glove box filled with argon gas, and the aluminum laminated bag was then sealed to produce a laminate type lithium ion secondary battery (A).

(Example 5-2 to Comparative Example 5-3)

Laminate type lithium ion secondary batteries (B) to (N) were produced in the same method as in Example 5-1 except that the negative electrodes shown in Table 6 were used, and a rate property and a cycle property were evaluated. Respective evaluation criteria are as follows.

(Evaluation criteria for rate property)

4 (very good): 80% or more
3 (good): 70% or more and less than 80%
2 (acceptable): 60% or more and less than 70%
1 (poor): less than 60%

(Evaluation criteria for cycle property)

4 (very good): 90% or more
3 (good): 85% or more and less than 90%
2 (acceptable): 80% or more and less than 85%
1 (poor): less than 80%

(Example 5-31)

A laminate type lithium ion secondary battery (C4) was produced in the same method as in Example 5-1 except that the standard negative electrode was used in place the negative electrode (A) and the positive electrode (C4) was used in place of the standard positive electrode.

(Example 5-32)

A laminate type lithium ion secondary battery (C5) was produced in the same method as in Example 5-31 except that the positive electrode (C5) was used in place of the positive electrode (C4).

[Table 6]

Table 6

| | Laminate type lithium ion secondary battery | Negative electrode | Evaluation result | |
|---|---|---|---|---|
| | | | Rate property | Cycle property |
| Example 5-1 | A | A | 4 | 4 |
| Example 5-2 | B | B | 4 | 4 |
| Example 5-3 | C | C | 4 | 4 |
| Example 5-4 | D | D | 3 | 3 |
| Example 5-5 | E | E | 3 | 3 |
| Example 5-6 | F | F | 3 | 3 |
| Example 5-7 | G1 | G1 | 3 | 3 |
| Example 5-8 | G2 | G2 | 4 | 4 |
| Example 5-9 | G3 | G3 | 3 | 4 |
| Example 5-10 | G4 | G4 | 2 | 2 |
| Example 5-11 | G5 | G5 | 2 | 2 |
| Example 5-12 | G6 | G6 | 3 | 3 |
| Example 5-13 | G7 | G7 | 3 | 2 |
| Example 5-14 | G8 | G8 | 3 | 3 |
| Example 5-15 | G9 | G9 | 4 | 3 |
| Example 5-16 | G10 | G10 | 4 | 4 |
| Example 5-17 | G11 | G11 | 4 | 4 |
| Example 5-18 | G12 | G12 | 4 | 4 |
| Example 5-19 | G13 | G13 | 3 | 3 |
| Example 5-20 | G14 | G14 | 3 | 3 |

(continued)

|  | Laminate type lithium ion secondary battery | Negative electrode | Evaluation result | |
|---|---|---|---|---|
|  |  |  | Rate property | Cycle property |
| Example 5-21 | G15 | G15 | 3 | 2 |
| Example 5-22 | H | H | 4 | 4 |
| Example 5-23 | I | I | 4 | 4 |
| Example 5-24 | J | J | 4 | 4 |
| Example 5-25 | K | K | 4 | 4 |
| Example 5-26 | L | L | 4 | 4 |
| Example 5-27 | GA | GA | 4 | 4 |
| Example 5-28 | IA | IA | 4 | 4 |
| Example 5-29 | C2 | C2 | 4 | 4 |
| Example 5-30 | C3 | C3 | 3 | 4 |
| Example 5-33 | Q | Q | 4 | 4 |
| Example 5-34 | R | R | 3 | 3 |
| Example 5-35 | S | S | 3 | 3 |
| Comparative Example 5-1 | GB | GB | 1 | 1 |
| Comparative Example 5-2 | M | M | 1 | 1 |
| Comparative Example 5-3 | N | N | 1 | 3 |
| Example 5-31 | C4 | C4 | 4 | 3 |
| Example 5-32 | C5 | C5 | 4 | 3 |

In the above examples, carbon nanotubes in which the pH was 8.0 to 10.0, the BET specific surface area was 200 to 800 $m^2/g$, and Y=-aX+b (a and b are constants, $-2.2 \leq a \leq -3.5$, $2,300 \leq b \leq 5,000$) when the fiber length (nm) of the carbon nanotubes was Y, and the BET specific surface area ($\mu m$) of the carbon nanotubes was X were used. In the example, lithium ion secondary batteries having a better rate property and cycle property than the comparative examples were obtained. Therefore, it can be clearly understood that the present invention can provide a lithium ion secondary battery having a high capacity, high output and high durability that cannot be realized with conventional carbon nanotubes and carbon nanotube dispersion liquids.

In addition, in the comparative examples, when the specific surface area was small, CNTs (M) having a short fiber length or CNTs (O) having a long fiber length could not provide a lithium ion secondary battery having an excellent rate property and cycle property. It was thought that, since the CNT (M) had a short fiber length, the battery performance deteriorated due to volume expansion of the active material according to charging and discharging of the battery.

While the present invention has been described above with reference to the embodiments, the present invention is not limited to the above description. For the configuration and details of the present invention, various changes that can be understood by those skilled in the art can be made within the scope of the invention.


**Claims**

1.  Carbon nanotubes, that satisfy following (1) to (3):

(1) a pH of a carbon nanotube aqueous dispersion liquid is 8.0 to 10.0;
(2) a BET specific surface area of the carbon nanotubes is 200 $m^2/g$ to 800 $m^2/g$; and

(3) Y=-aX+b (a and b are constants, 2.2≤a≤3.5, 2,300≤b≤5,000) when an average fiber length (nm) of the carbon nanotubes is Y, and the BET specific surface area ($m^2$/g) of the carbon nanotubes is X.

2. The carbon nanotubes according to claim 1,
   wherein, in a Raman spectrum of the carbon nanotubes, a G/D ratio is 0.5 to 4.5 when a maximum peak intensity in a range of 1,560 $cm^{-1}$ to 1,600 $cm^{-1}$ is G, and a maximum peak intensity in a range of 1,310 $cm^{-1}$ to 1,350 $cm^{-1}$ is D.

3. The carbon nanotubes according to claim 1 or 2,
   wherein an average outer diameter of the carbon nanotubes is 5 nm to 20 nm.

4. The carbon nanotubes according to any one of claims 1 to 3,
   wherein a volume resistivity of the carbon nanotubes is $1.0 \times 10^{-2}$ Ω·cm to $3.0 \times 10^{-2}$ Ω·cm.

5. A carbon nanotube dispersion liquid comprising the carbon nanotubes according to any one of claims 1 to 4, a dispersant, and an aqueous liquid medium.

6. The carbon nanotube dispersion liquid according to claim 5,
   wherein a complex modulus of elasticity of the carbon nanotube dispersion liquid is 1 Pa to 100 Pa.

7. The carbon nanotube dispersion liquid according to claim 5 or 6,
   wherein the product ($X \times Y$) of a complex modulus of elasticity X (Pa) and a phase angle Y(°) of the carbon nanotube dispersion liquid is 100 or more and 1,500 or less.

8. The carbon nanotube dispersion liquid according to any one of claims 5 to 7, which contains 10 parts by mass to 100 parts by mass of the dispersant with respect to 100 parts by mass of the carbon nanotubes.

9. The carbon nanotube dispersion liquid according to any one of claims 5 to 8,
   wherein a pH is 7 to 11.

10. The carbon nanotube dispersion liquid according to any one of claims 5 to 9,
    wherein a 50% particle size (D50) calculated according to laser diffraction particle size distribution measurement is 1 μm to 20 μm.

11. The carbon nanotube dispersion liquid according to any one of claims 5 to 10, which is a dispersion liquid containing 0.4 parts by mass or more and 2.5 parts by mass or less of carbon nanotubes in 100 parts by mass of the carbon nanotube dispersion liquid, and in which, when a viscosity of the carbon nanotube dispersion liquid measured at 6 rpm using a B type viscometer is $\alpha$, and the viscosity of the carbon nanotube dispersion liquid measured at 60 rpm is $\beta$, $\alpha/\beta$ satisfies $2.0 \leq \alpha/\beta \leq 6.0$.

12. A carbon nanotube resin composition comprising the carbon nanotube dispersion liquid according to any one of claims 5 to 11, and a binder resin.

13. The carbon nanotube resin composition according to claim 12,
    wherein the binder resin includes at least one selected from the group consisting of carboxymethyl cellulose, styrene butadiene rubber, and polyacrylic acid.

14. A mixture slurry comprising the carbon nanotube resin composition according to claim 12 or 13, and an active material.

15. An electrode film which is a coating film of the mixture slurry according to claim 14.

16. A nonaqueous electrolyte secondary battery, comprising a positive electrode, a negative electrode, and an electrolyte, wherein at least one of the positive electrode and the negative electrode includes the electrode film according to claim 15.

17. A nonaqueous electrolyte secondary battery comprising the carbon nanotubes according to any one of claims 1 to 4.

18. A vehicle comprising the nonaqueous electrolyte secondary battery according to claim 16 or 17.

FIG. 1

## INTERNATIONAL SEARCH REPORT

| | International application No. |
|---|---|
| | PCT/JP2021/025560 |

**A. CLASSIFICATION OF SUBJECT MATTER**

H01M 4/13(2010.01)i; H01M 4/139(2010.01)i; H01M 4/62(2006.01)i; C01B 32/16(2017.01)i; C01B 32/174(2017.01)i
FI: C01B32/174; H01M4/62 Z; H01M4/139; H01M4/13; C01B32/16

According to International Patent Classification (IPC) or to both national classification and IPC

**B. FIELDS SEARCHED**

Minimum documentation searched (classification system followed by classification symbols)
H01M4/13; H01M4/139; H01M4/62; C01B32/16; C01B32/174

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 6638846 B1 (TOYO INK SC HOLDINGS CO., LTD.) 29 January 2020 (2020-01-29) claims, examples, tables, paragraphs [0049]-[0071], [0086], etc. | 1-18 |
| Y | JP 2018-127397 A (TODA KOGYO CORP.) 16 August 2018 (2018-08-16) claims, examples, in particular, example 5, etc. | 1-18 |
| Y | JP 2014-238944 A (HITACHI CHEMICAL CO., LTD.) 18 December 2014 (2014-12-18) claims, examples, etc. | 1-8 |
| Y | JP 2013-199419 A (TORAY INDUSTRIES, INC.) 03 October 2013 (2013-10-03) claims, examples, paragraph [0037], etc. | 1-18 |
| Y | JP 2019-210173 A (TOYO INK SC HOLDINGS CO., LTD.) 12 December 2019 (2019-12-12) claims, examples, tables, in particular, examples 1, 3, etc. | 2, 4, 6-7, 11 |

| ☒ Further documents are listed in the continuation of Box C. | ☒ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 August 2021 (26.08.2021) | 07 September 2021 (07.09.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2021/025560

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2018-534731 A (LG CHEM, LTD.) 22 November 2018 (2018-11-22) paragraphs [0170]-[0180] | 6-7 |
| P, X | JP 2020-105316 A (TOYO INK SC HOLDINGS CO., LTD.) 09 July 2020 (2020-07-09) claims, examples, tables, etc. | 1-18 |

Form PCT/ISA/210 (continuation of second sheet) (January 2015)

INTERNATIONAL SEARCH REPORT

Information on patent family members

International application No.

PCT/JP2021/025560

| Patent Documents referred in the Report | Publication Date | Patent Family | Publication Date |
|---|---|---|---|
| JP 6638846 B1 | 29 Jan. 2020 | (Family: none) | |
| JP 2018-127397 A | 16 Aug. 2018 | (Family: none) | |
| JP 2014-238944 A | 18 Dec. 2014 | (Family: none) | |
| JP 2013-199419 A | 03 Oct. 2013 | (Family: none) | |
| JP 2019-210173 A | 12 Dec. 2019 | WO 2019/230820 A1 claims, examples 1, 3 | |
| JP 2018-534731 A | 22 Nov. 2018 | US 2018/0175370 A1 claims, paragraphs [0157]-[0163] WO 2017/099358 A1 KR 10-2017-0069141 A CN 107851800 A | |
| JP 2020-105316 A | 09 Jul. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4155776 A
- JP H4237971 A
- JP 2004178922 A
- JP 2011070908 A
- JP 2005162877 A
- JP 2012221672 A
- JP 2020011872 A
- JP 2010254546 A
- JP 2014182892 A
- JP 2020116805 A
- JP 2021034455 A
- JP 2012072050 A
- JP 2019108256 A
- JP 2018150218 A